# EUROPÄISCHE PATENTSCHRIFT

(11) **EP 1 136 395 B1**
(45) Veröffentlichungstag und Bekanntmachung des Hinweises auf die Patenterteilung: **03.09.2003**
(21) Anmeldenummer: 01101540.1
(22) Anmeldetag: 24.01.2001
(51) Int. Cl.: B65G 1/137

(54) **System zum Kommissionieren von in Regallagern befindlichen Artikeln**
Order picking system for articles in warehouses
Système pour la composition de commandes d'articles stockés dans des entrepôts

(30) Priorität: 17.03.2000 DE 10013213; 22.11.2000 DE 10057735
(43) Veröffentlichungstag der Anmeldung: 26.09.2001
(73) Patentinhaber: WITRON Logistik & Informatik GmbH, 92711 Parkstein (DE)
(72) Erfinder: Winkler, Walter, 92711 Parkstein (DE)
(74) Vertreter: Betten & Resch

(56) Entgegenhaltungen:
- GB-A- 1 103 603
- US-A- 4 773 807
- US-A- 5 379 229
- US-A- 5 564 890
- US-A- 5 582 497
- HEPTNER K HEPTNER K: "METHODEN DER WARENVERTEILUNG UND AUFTRAGSZUSAMMENSTELLUNG IN DER USA.METHODS OF GOODS DISTRIBUTION AND ORDER FILLING IN THE UNITED STATES" FORDERN UND HEBEN, KRAUSSKOPF VERLAG FUR WIRTSCHAFT. MAINZ, DE, Bd. 19, Nr. 12, 1. September 1969 (1969-09-01), Seiten 727-732, XP000670542 ISSN: 0341-2636

## Beschreibung

Die Erfindung betrifft ein System zum Kommissionieren von auf Entnahmepaletten oder in speziellen Behältern in Regallagem befindlichen Artikeln siehe z.B. das Dokument US-A-5 379 229.

Der Erfindung liegt im Wesentlichen die Aufgabe zugrunde, ein derartiges System zu scharfen, dass sich in erster Linie durch hohe Flexibilität und große Effektivität bei optimierter Ergonomie auszeichnet.

Diese Aufgabe wird im Wesentlichen gelöst durch ein System der eingangs genannten Art mit
- einer Mehrzahl paralleler Regalreihen zum Lagern und Puffern von Einheiten zur Aufnahme der Artikel,
- zwischen den Regalreihen abwechselnd gebildeten Einlager-Gassen und Pick-Gassen,
- mindestens einem Einlager-Fahrzeug in jeder Einlager-Gasse, das zur Aufnahme wenigstens einer Einheit ausgebildet ist und entlang einer jeden Einlager-Gasse zum Einlagern der Einheiten in die Palettenregale verfahrbar ist,
- mindestens einem Picker-Fahrzeug, das in jeder Pickgasse zum Picken der zu kommissionierenden Artikeln entlang jeweils einer der beiden sich gegenüberliegenden, die Pick-Gasse bildenden Pickfronten verfahrbar ist,
- Pufferplätzen, die in den Pickgassen zwischen den Verfahrwegen der entlang den beiden gegenüberliegenden Pickfronten verfahrbaren Picker-Fahrzeugen angeordnet sind, zum Zwischenpuffern von und/oder zur Übergabe der zu kommissionierenden Einheiten von einem Picker-Fahrzeug auf einer Seite der Pick-Gasse zu einem Picker-Fahrzeug auf der anderen Seite der Pick-Gasse und
- einer Systemsteuerung mit einem Steuerrechner.

Das genannte Einlager- bzw. Nachschub-Fahrzeug dient vorzugsweise außerdem dem Transport der Einheiten von Pick-Gasse zu Pick-Gasse.

In bevorzugter Weiterbildung der Erfindung ist vorgesehen, dass in den Regalreihen jeweils mindestens eine Pufferbahn ausgebildet ist zur Übergabe von Auftragspaletten von einem Picker-Fahrzeug zu einem Einlager-Fahrzeug und von dort gegebenenfalls zu einem Picker-Fahrzeug der benachbarten Pickgasse, und/oder zur Übergabe einer Auftragspalette von einem Einlager-Fahrzeug zu einem Picker-Fahrzeug. Es besteht auch die Möglichkeit, dass zwischen den Palettenregalen sich nur eine Pickgasse befindet. Die vorher beschriebenen Übergabe- und Pufferplätze befinden sich dann in den Palettenregalen.

Das erfindungsgemäße System ermöglicht u. a. eine einstufige Kommissionierung direkt auf das Versandladehilfsmittel, die Palette, wobei nur eine einzige Handling-Stufe erforderlich ist. Der Transport der Auftragspalette vom Auftragsstart bis zur Versandsortierung erfolgt automatisch durch das Kommissioniersystem u.a. mittels Pufferförderern. Die Erfindung ermöglicht eine Optimierung der Durchlaufzeit durch Priorisierung bestimmter Auftragspaletten: Durch die erfindungsgemäß geschaffene Möglichkeit der Übergabe der Auftragspaletten zwischen den Picker-Fahrzeugen einer Pickgasse über die Pufferplätze und aufgrund der Schaffung der Möglichkeit der Übergabe der Auftragspaletten von einer Pickgasse zu einer benachbarten Pickgasse über die Pufferbahnen in den Palettenregalen sowie das jeweils zugeordnete Einlager-Fahrzeug können sich Auftragspaletten im Durchlauf überholen. Hierdurch können Aufträge priorisiert bearbeitet werden und unabhängig von der Anzahl der bereits gestarteten Auftragspaletten in der Anlage schnellstmöglich durch die Anlage geschleust werden. Darüber hinaus ist es möglich, mittels der erfindungsgemäß vorgesehenen Pufferplätze die Auslastungsschwankungen der Kommissionierer zu steuern.

Das erfindungsgemäße System eignet sich insbesondere zum Kommissionieren von Palettenregalen auf Paletten gelagerten Artikeln. Das System ist jedoch auch vorteilhaft einsetzbar zum Kommissionieren von kleineren Gegenständen, die in speziellen Lagerbehältem bzw. Kleinladungsträgern KLT oder in Kartons aufgenommen sind. Diese Lagerbehälter können entweder in spezifischen, den Abmessungen der Lagerbehälter angepassten Lagerkanälen oder mittels mobilen Lagekanal-Einsätzen, die in die Palettenkanäle eingesetzt werden, in ein Palettenregal integriert werden. Weiterhin ist es möglich, ein separates Regalmodul vorzusehen, dass ausschließlich zur Kommissionierung von Lagerbehältem ausgebildet ist. Die zusätzliche Bereitstellung von Lagerplatz in den Lagerbehältern zusätzlich zu den Palettenplätzen ermöglicht die effiziente Lagerung und Kommissionierung auch von kleineren Artikeln und Langsamläufem. Durch die Lagerbehälter oder Kleinladungsträger wird eine Reduzierung der Pickfront und damit der Pickweg erreicht. Dies ermöglicht aufgrund der verkürzten Wegezeiten eine höhere Kommissionierieistung und kürzere Auftragsdurchlaufzeiten.

In bevorzugter Weiterbildung der Erfindung ist vorgesehen, dass an den Palettenregalen sowohl statische als auch dynamische Kommissionier-Kanäle ausgebildet sind. Vorzugsweise sind die Kommissionier-Kanäle der Palettenregale hierbei so ausgebildet, dass sie sowohl als statische als auch als dynamische Kommissionier-Kanäle nutzbar sind.

Als "statische Kanäle" im Sinne der vorliegenden Erfindung werden solche Kommissionierkanäle der Palettenregale verstanden, denen Artikel mit hohem Absatz im Rahmen fester Bereitstellungsplätze zur Kommissionierung zugeordnet sind (statische Aufstellung). In den statischen Kanälen werden immer mehrere, vorzugsweise zwei bis drei Paletten des jeweiligen Artikels hintereinander bereit gestellt. Von der vorderen, der Pickfront zugeordneten Palette wird kommissioniert, die hinteren Paletten stehen als Vorrat bereit. Wenn die vordere Palette leer ist, wird die Palette vom Kommissionierer entnommen und die Nachschubpaletten rollen automatisch über Schwerkraftrollenbahnen nach vorne. Durch die Nulldurchgangsquittierung des Kommissionierers wird die Bereitstellung einer neuen Palette aus dem Vorratsbereich angestoßen.

Unter "dynamischen Kanälen" im Sinne der vorliegenden Erfindung sind solche Kommissionierkanäle der Palettenregale zu verstehen, in denen Paletten mit Artikeln mit geringem Absatz dynamisch, d. h. nur bei aktuellem Bedarf, zur Kommissionierung aufgestellt werden, wodurch die Ausdehnung der Pickfront reduziert wird. Für die dynamische Aufstellung sind bestimmte Kommissionierkanäle definiert. Wenn die Aufforderung von der Kommissionierung für einen dynamischen Artikel vorliegt, wird dieser auf dem dynamischen Platz aufgestellt und bei der Anforderung eines neuen Artikels wieder entnommen und in den Vorratsbereich zurückgestellt.

Nachdem zumindest einige, vorzugsweise jedoch alle Kommissionierkanäle so ausgerüstet sind, dass sie sowohl als statische als auch als dynamische Kommissionierkanäle nutzbar sind, ergibt sich die Möglichkeit des kontinuierlichen Reprofilings der Artikelaufstellung. Zu diesem Zweck ist in bevorzugter Weiterbildung der Erfindung vorgesehen, dass das System Steuermittel umfasst, um auf der Basis von Vergangenheitsbetrachtungen und/oder Prognosen und/oder vorliegenden Aufträgen die optimale Artikelaufstellung in den Kommissionierkanälen zu ermitteln und bei einer Abweichung hiervon, deren Größe definierbar ist, die Pickfront zu reorganisieren, d. h. ein Reprofiling durchzuführen. Die Auslegung der Kommissionierkanäle erlaubt eine automatische Rücknahme einer aufgestellten Palette in den Vorratsbereich. Soll ein statischer Artikel gewechselt werden, werden die entsprechenden Paletten aus dem Kommissionierkanal entnommen. Der Kommissionierkanal kann nun wahlweise statisch oder dynamisch neu belegt werden. Somit ist ein ständiges Reprofiling der Artikelaufstellung im laufenden Betrieb ohne Eingriff des Personals möglich.

Obwohl zur Einlagerung der Paletten in den Vorratsbereich und der Nachschub der Paletten in die Kommissionierkanäle grundsätzlich auch durch manuelle Stapler, die per Datenfunk gesteuert werden können, erfolgen könnte, ist in bevorzugter Weiterbildung der Erfindung vorgesehen, dass die Einlager-Fahrzeuge als automatische Regelbediengeräte ausgebildet sind.

Im Falle der vorliegenden Erfindung sind der Bestand und die Kommissionierung in einem einzigen System, dem erfindungsgemäßen System, integriert, was kurze Servicezeiten gewährleistet. Größere Mengen an Bestand können gegebenenfalls in einem separaten Vorratsbereich, vorzugsweise einem Paletten-Hochregallager mit fördertechnischer Verbindung zum erfindungsgemäßen System, untergebracht sein.

Die Picker-Fahrzeuge des erfindungsgemäßen Systems nehmen neben der Auftragspalette vorzugsweise auch den Picker auf, so dass die Auftragspaletten einschließlich des Pickers mittels des Picker-Fahrzeugs sukzessive durch die Pickfronten geschleust werden, in denen Artikel für die Auftragspalette aufgestellt sind. Die Pickpositionen werden automatisch angefahren und es folgt eine automatische Positionierung vor dem jeweiligen Kommissionierkanal. Hierdurch werden Wartezeiten der Picker reduziert und Laufwege der Picker in der Kommissionierung entfallen. Nachdem die Auftragspalette stets mitgeführt wird, entstehen keine Wegezeiten zur Auftragspalette.

In bevorzugter Weiterbildung der Erfindung ist vorgesehen, dass das Picker-Fahrzeug die Auftragspalette und den Picker höhenverstellbar trägt. Besonders vorteilhaft ist es, wenn das Picker-Fahrzeug die Auftragspalette relativ zum Picker höhenverstellbar trägt.

In besonders vorteilhafter Weiterbildung der Erfindung kann dies dadurch erreicht werden, dass eine erste Hubeinrichtung mit einer höhenverstellbaren Picker-Trageinrichtung für den Picker und eine zweite Hubeinrichtung mit einer höhenverstellbaren Paletten-Trageinrichtung für eine Auftragspalette vorgesehen ist, wobei die Picker-Trageinrichtung und die Paletten-Trageinrichtung relativ zur jeweiligen Entnahmeposition unabhängig voneinander in ihrer Höhe positionierbar sind.

Der auf der Picker-Trageinrichtung befindliche Picker (Kommissionierer) kann mittels des Fahrzeuges in der Pickfront verfahren werden. Die beiden unabhängig voneinander arbeitenden Hubeinrichtungen des Fahrzeuges ermöglichen es, die jeweils ergonomisch günstigste Entnahme- und Abgabehöhe einerseits für die Picker-Trageinrichtung und andererseits für die Paletten-Trageinrichtung zu erreichen. Hierdurch können Belastungen des Pickers durch Bücken und Heben sowie Herabnehmen von Kartons durch suboptimale Entnahme- und Abgabehöhen vermieden werden. Durch das automatische Anfahren der Entnahmepositionen entfallen für den Picker Gehwege in der Kommissionierung, was zu einer wesentlichen Reduzierung der Wegzeiten führt und den Kommissioniervorgang effektiver gestaltet. Bedingt durch die vorzugsweise vorgesehene Rechnersteuerung der Vorrichtung entfallen auch diejenigen Zeiten, die der Picker in herkömmlichen Systemen benötigt, um die nächste Entnahmeposition zu finden (Orientierung zum nächsten Fach).

In vorteilhafter Weiterbildung der Erfindung umfasst die Picker-Trageinrichtung eine Kabine für den Picker. Sie ist vorzugsweise mit einer umlaufenden Absturzsicherung für den Picker versehen und weist ein Terminal zur Anzeige der Pickpositionen auf. Zweckmäßigerweise ist als zusätzliche Sicherheitseinrichtung ein Totmann-Schalter vorgesehen, der gleichzeitig zur Quittierung der Kommissionierung verwendet werden kann.

Die Paletten-Trageinrichtung weist in bevorzugter Weiterbildung der Erfindung ein Lastaufnahmemittel zum Aufnehmen und Abgeben einer Auftragspalette auf. Das Lastaufnahmemittel ist zweckmäßigerweise so ausgebildet, dass ein Transport der Auftragspalette quer zur Verfahrrichtung des Wagens ermöglicht wird.

In besonders bevorzugter Weiterbildung der Erfindung weist die Paletten-Trageinrichtung eine Sensoreinrichtung zum Ermitteln des Füllgrades der Auftragspalette auf, wodurch es ermöglicht wird, die Höhe der Paletten-Trageinrichtung an den Füllgrad der Auftragspalette anzupassen.

Das Picker-Fahrzeug wird in der Pickfront ähnlich einem Regalfahrzeug auf Schienen geführt und von dem Steuerrechner gesteuert. Das Fahrzeug wird entsprechend der Picksteuerung zur jeweiligen Entnahmeposition vor der jeweils aktuellen Entnahmepalette in Längsrichtung positioniert und, vorzugsweise gleichzeitig, werden sowohl der Picker als auch die Auftragspalette in der Höhe optimal positioniert. Der Picker kann sodann die am Terminal angezeigte Menge von der Entnahmepalette entnehmen und auf die Auftragspalette umschlichten. Das Picker-Fahrzeug wird sodann an die nächste relevante Entnahmeposition gesteuert oder zu einem Übergabeplatz verfahren.

In bevorzugter Weiterbildung der Erfindung ist vorgesehen, dass die Höhe der Picker-Trageinrichtung an der jeweiligen Entnahmeposition auf der Basis der Restbestandsmenge der Artikel auf der Entnahmepalette steuerbar ist. Weiterhin ist vorgesehen, dass die Höhe der Paletten-Trageinrichtung an der jeweiligen Entnahmeposition auf der Basis des Füllgrades der Auftragspalette steuerbar ist Auf diese Weise läßt sich eine ergonomisch optimale Entnahme- und Abgabehöhe von Picker-Trageinrichtung und Paletten-Trageinrichtung zu jedem Zeitpunkt des Kommissionierens erreichen, wodurch die körperlichen Belastungen des Pickers auf ein Minimum reduziert werden; insbesondere erfolgt keine Belastung der Wirbelsäule des Pickers beim Pickvorgang.

Zusätzlich ist zweckmäßigerweise vorgesehen, dass die Höhe der Picker-Trageinrichtung und/oder der Paletten-Trageinrichtung an der jeweiligen Entnahmeposition für jeden Picker individuell einstellbar ist, d. h., die optimale Zugriffshöhe kann in der Steuerung individuell auf jeden Mitarbeiter ausgerichtet werden. Darüberhinaus ist zweckmäßigerweise vorgesehen, dass die von der Steuerung vorgegebenen Höhen vom Picker manuell nachkorrigierbar sind. Demgegenüber erfolgt die Fahrsteuerung in Gassenrichtung vorzugsweise vollautomatisch ohne Eingriffsmöglichkeit für den Picker.

Weitere vorteilhafte Merkmale der Erfindung ergeben sich aus den übrigen Unteransprüchen sowie aus der nachfolgenden Beschreibung, in der ein bevorzugtes Ausführungsbeispiele der Erfindung anhand der Zeichnung näher beschrieben ist. In der Zeichnung zeigen in schematischer bzw. halbschematischer Darstellung:
- Fig. 1: eine Draufsicht auf ein Ausführungsbeispiel eines erfindungsgemäßen Systems,
- Fig. 2: ein Ausschnitt eines vertikalen Schnitts durch das System gemäß Fig. 1,
- Fig. 3: eine Seitenansicht eines Picker-Fahrzeugs, wie es im erfindungsgemäßen System zur Anwendung kommt,
- Fig. 4: eine perspektivische Ansicht des Picker-Fahrzeugs gemäß Fig. 3,
- Fig. 5a, 5b, 6a, 6b, 7a, 7b, 8a, 8b, 9a, 9b, 10a, 10b, 11a, 11b und 12a, 12b: Frontansichten bzw. Seitenansichten des Picker-Fahrzeugs, die unterschiedliche Niveaubeispielse für die Picker-Trageinrichtung und die Paletten-Trageinrichtung darstellen,
- Fig. 13: eine Draufsicht auf ein weiteres Ausführungsbeispieil des erfindungsgemäßen Systems, und
- Fig. 14: einen Ausschnitt eines vertikalen Schnitts durch das System von Fig. 13

### 1. Ausführungsbeispiel: System zur Kommissionierung von Paletten

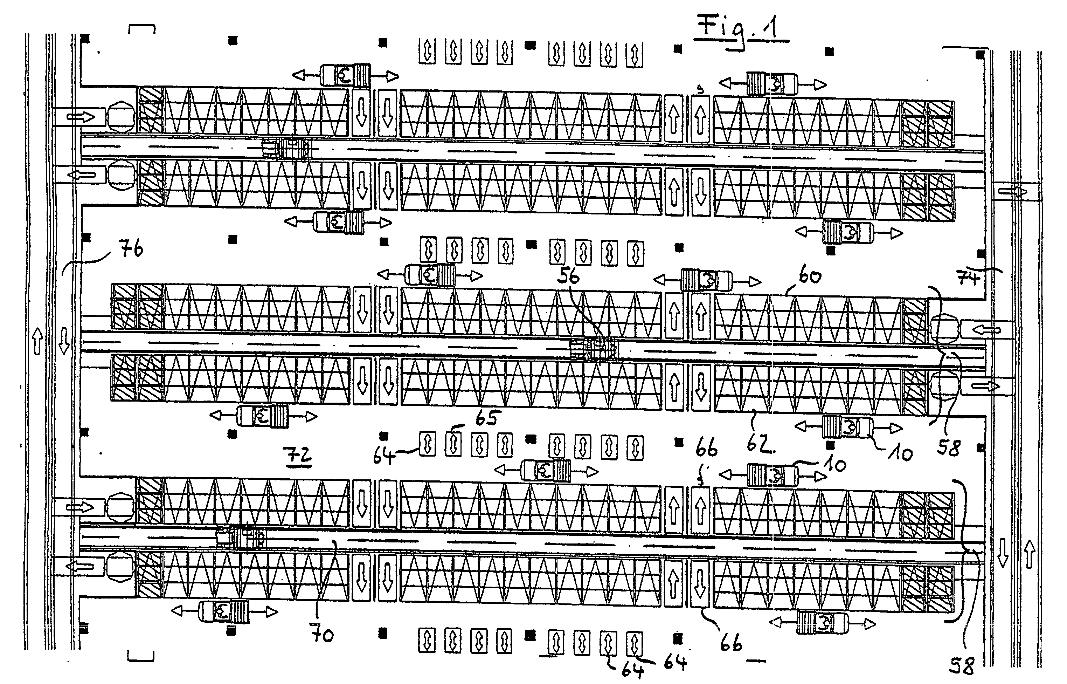

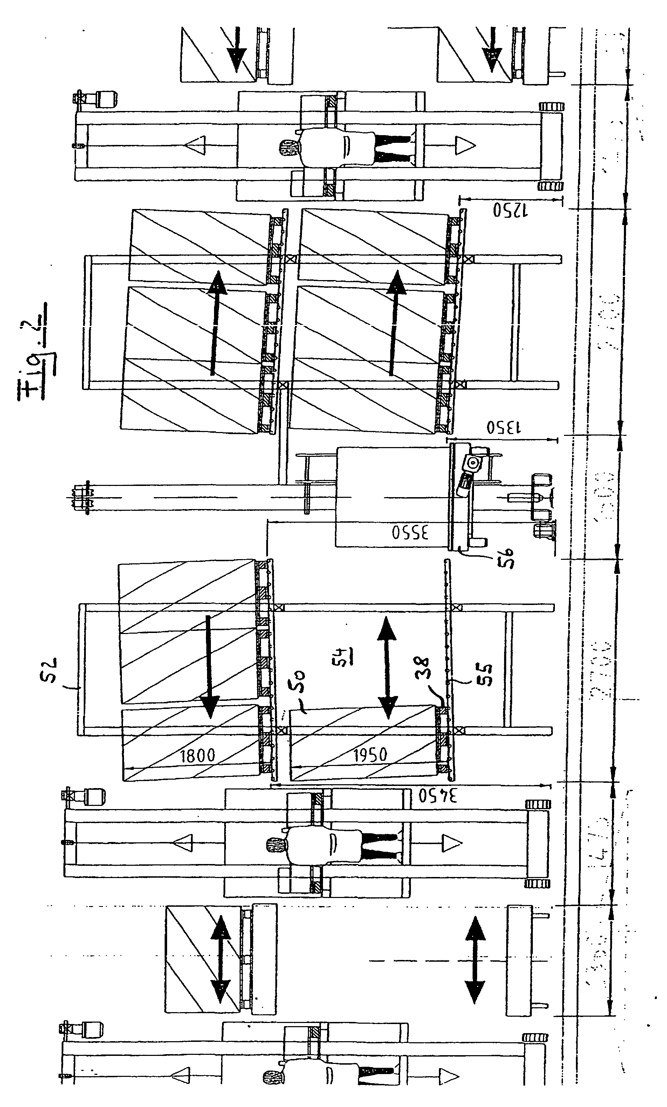

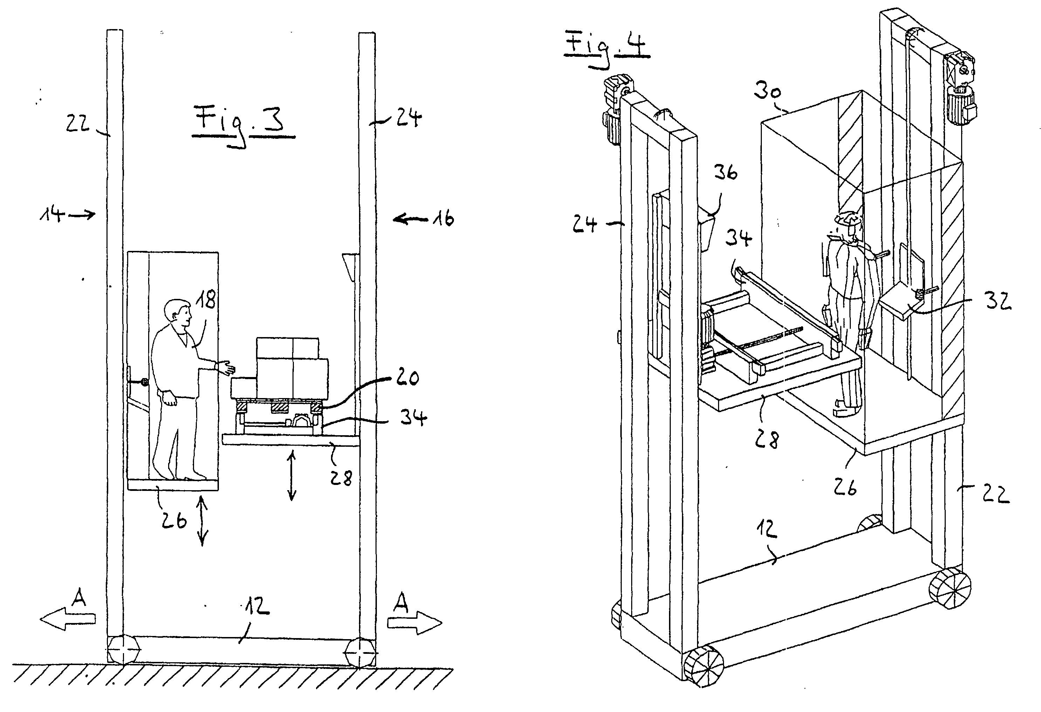

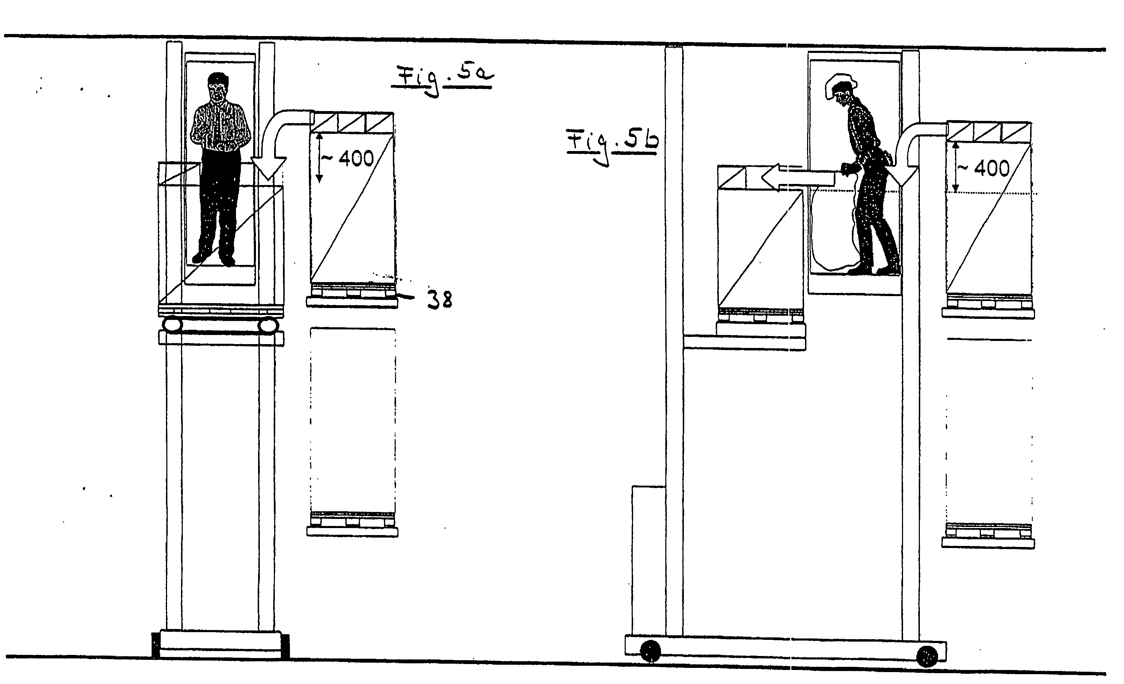

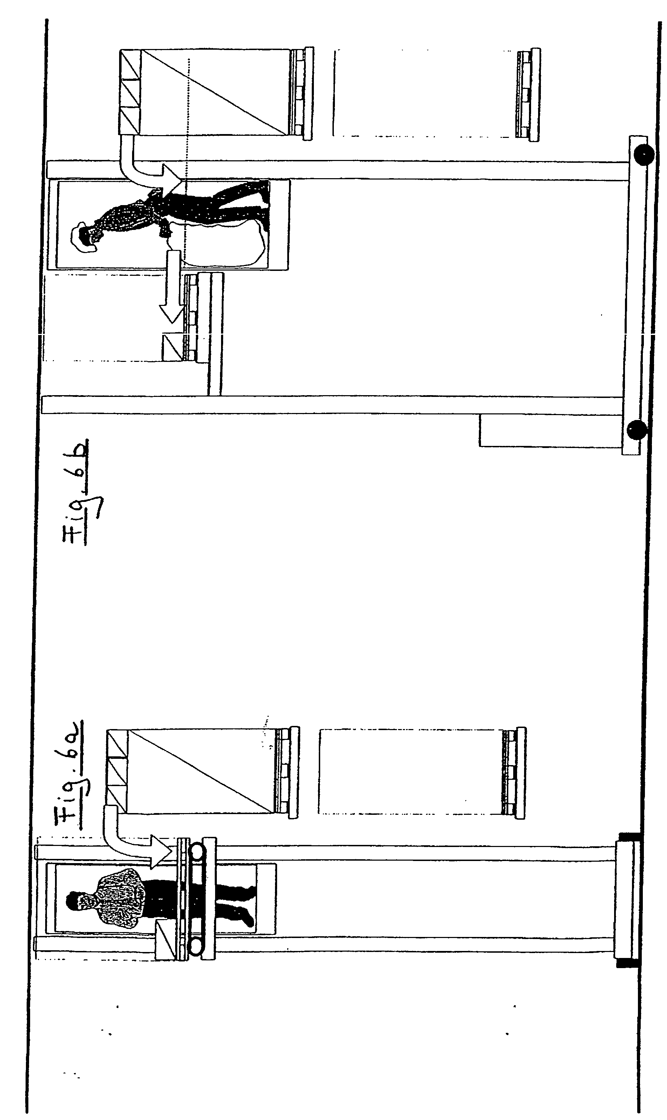

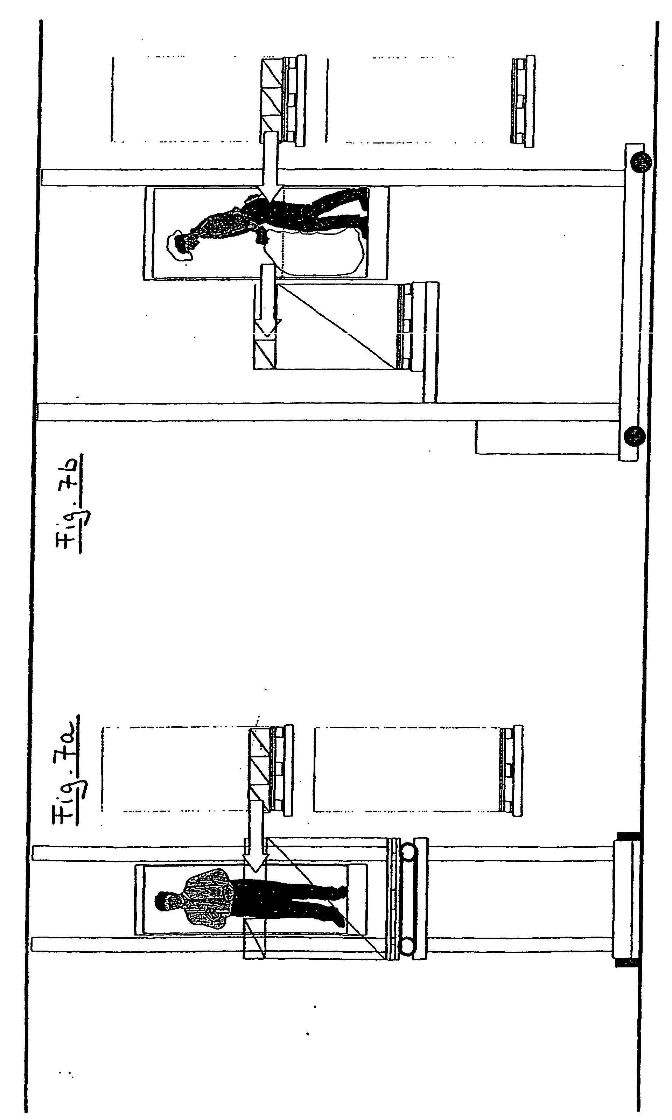

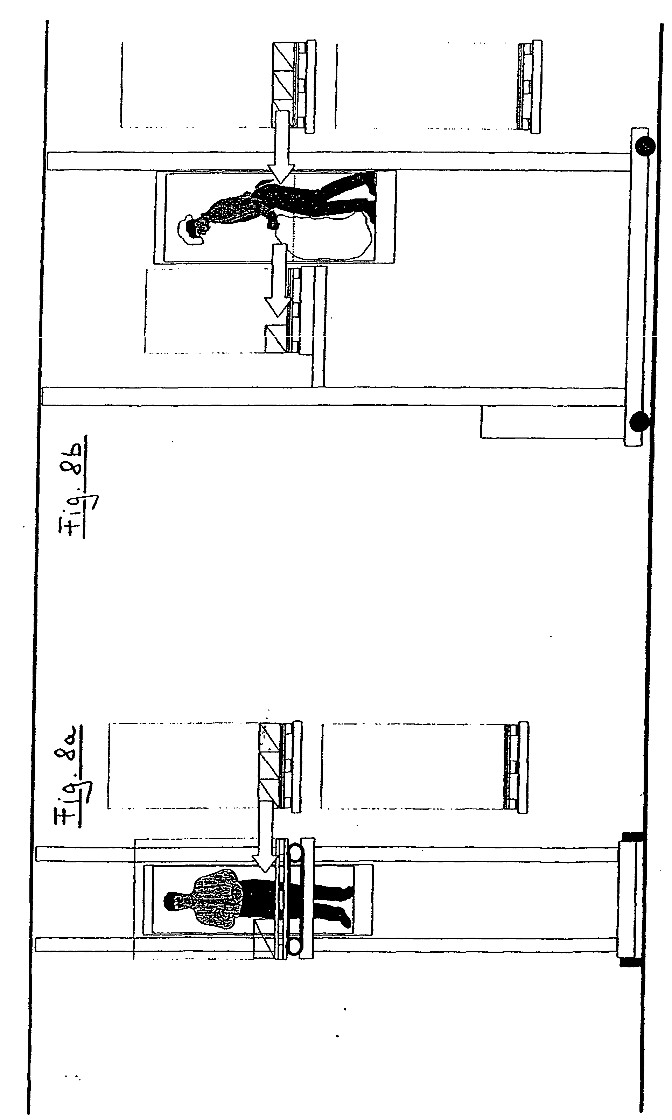

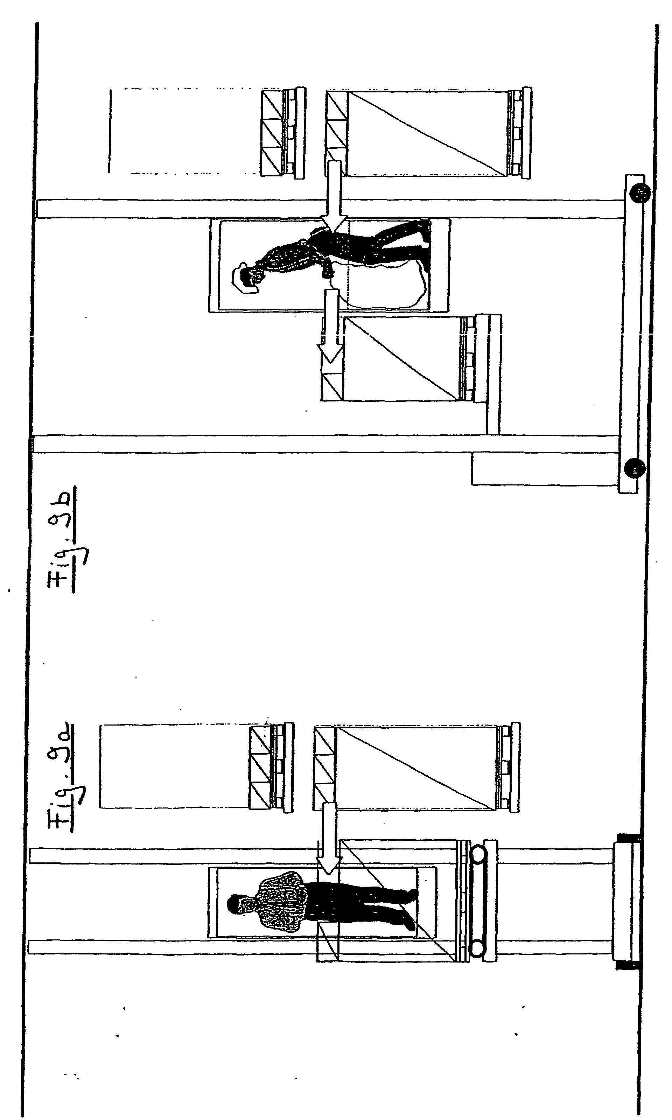

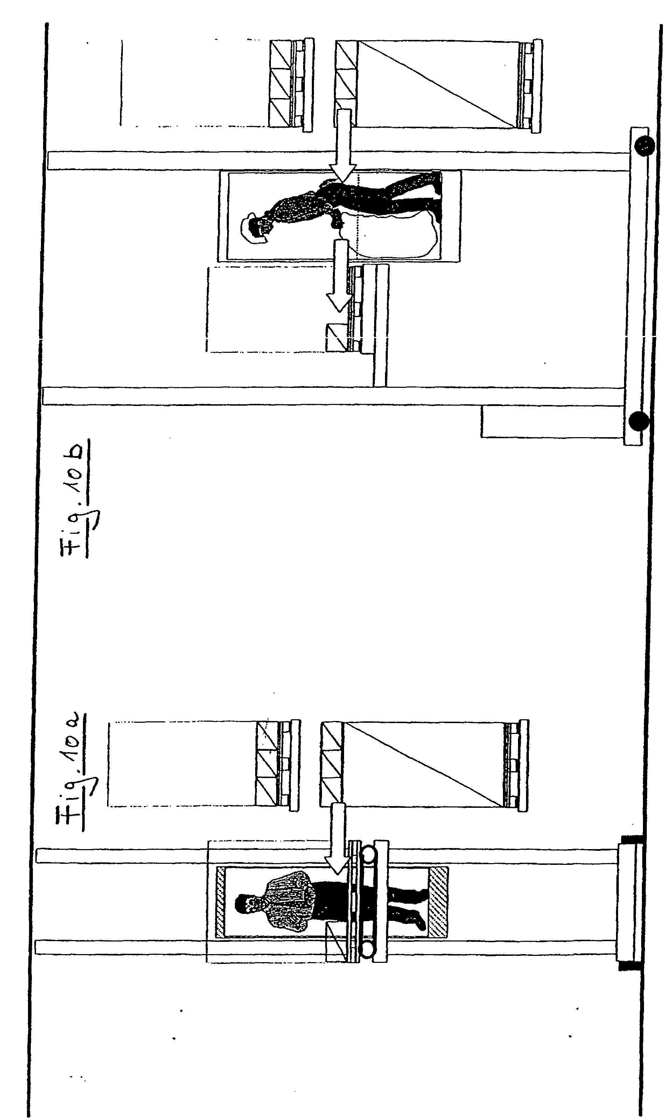

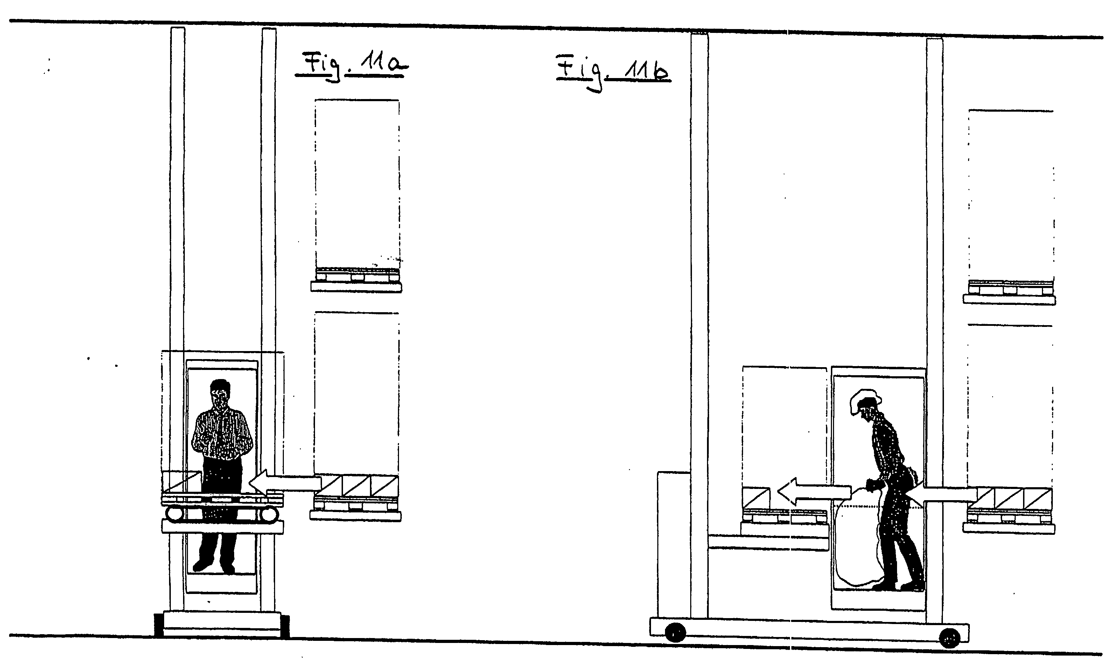

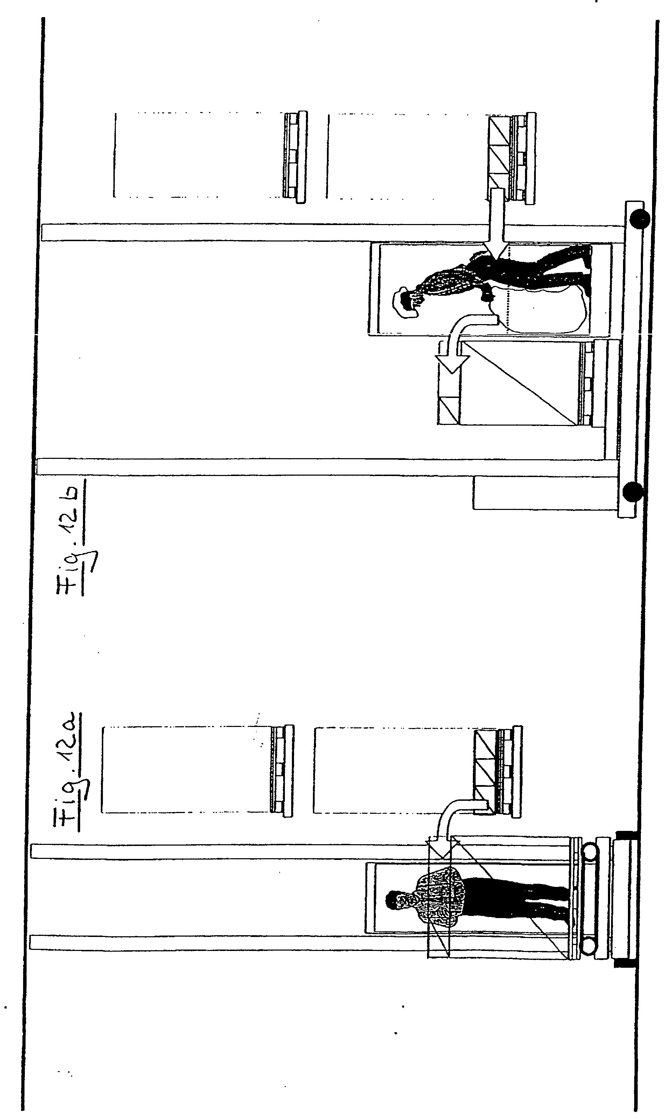

Zunächst wird auf die Fig. 1 und 2 Bezug genommen, welche ein System für die integrierte Lagerung und Kommissionierung von Paletten zeigen.

Das erfindungsgemäße System umfasst eine Anzahl paralleler Regalzeilen 60, 62, wobei jeweils zwei benachbarte Regalzeilen 60, 62 eine Einlager-Gasse 70 und eine Pick-Gasse 72 definieren. In den Einlager-Gassen 70 ist jeweils ein Regalbediengerät 56 verfahrbar. An den den Pick-Gassen 72 zugewandten Pickfronten der Regalzeilen 60, 62 sind jeweils zwei Picker-Fahrzeuge 10 auf Schienen verfahrbar. Jedes der Picker-Fahrzeuge 10 trägt (in der Regel) einen Picker 18 und eine Auftragspalette 20. In der Mitte einer jeden Pick-Gasse, d. h. einerseits mittig zwischen den jeweiligen Verfahrwegen der Picker-Fahrzeuge gegenüberliegender Pickerfronten und andererseits ebenfalls mittig in Längsrichtung der Pick-Gasse gesehen, sind Pufferplätze 64 eingerichtet, auf die Auftragspaletten von den Picker-Fahrzeugen abgelegt werden können bzw. von denen abgelegte Auftragspaletten von den Picker-Fahrzeugen aufgenommen werden können. Es besteht auch die Möglichkeit, dass zwischen den Palettenregalen sich nur eine Pickgasse befindet. Die vorher beschriebenen Übergabe- und Pufferplätze befinden sich dann in den Palettenregalen.

An den Enden der Einlager-Gassen 70 und Pick-Gassen 72 bzw. der Regelzeilen 60 und 62 sind, an beiden Seiten, senkrecht hierzu verlaufende Transportbahnen 74, 76 angeordnet, die dem Fördertechnik-Netzwerk zuzuordnen sind, über das die Entnahmepaletten dem erfindungsgemäßen System zugeführt und die Auftragspaletten vom erfindungsgemäßen System abgeführt werden.

Die Lagerung der Paletten 50 erfolgt im Falle des vorliegenden Ausführungsbeispiels in mehrstöckigen Palettenregalen 52 (vgl. Fig. 2), in denen die Paletten quer und dreifachtief gelagert werden. Für die Kommissionierung werden die Artikel in Kommissionierkanälen 54 auf mindestens einer Ebene bereit gestellt, wobei jeder Kommissionierkanal drei Paletten hintereinander aufnehmen kann. Wie dargestellt, sind mehrere Kommissionierebenen übereinander eingerichtet.

Die Einlagerung der Entnahmepaletten in den Vorratsbereich und der Nachschub der Entnahmepaletten in die Kommissionierkanäle erfolgt mittels des Regelbediengeräts 56, welches, wie aus Fig. 1 ersichtlich, jeweils zwei gegenüberliegend benachbarte Regale bedienen kann. Die automatischen Regelbediengeräte 56 können konventioneller Bauart sein und bedürfen daher keiner näheren Beschreibung. Die Einlagerung erfolgt vorzugsweise über der Kommissionierbereitstellung (im Bild nicht ersichtlich) der Palettenregale 52.

Zwei Regalzeilen 60, 62 mit einem Regelbediengerät 56 bilden jeweils ein Modul 58, an dessen beiden Pickfronten die Picker Auftragspaletten kommissionieren. Die Paletten aus dem Wareneingang werden dem jeweils gewünschten Modul zur Einlagerung zugeführt. Diese Zuführung erfolgt vorzugsweise mit einer automatischen Fördertechnik. Soweit aufgrund der aktuellen Stellplatzkapazität möglich, werden die Wareneingangspaletten eines Artikels in demjenigen Modul eingelagert, in dem sie auch in der Kommissionierung aufgestellt werden. Damit wird der Bestand eines Artikels soweit möglich in demjenigen Modul gehalten, in dem er auch kommissioniert wird. Können nicht alle Paletten im entsprechenden Modul gelagert werden, müssen diese zu einem späteren Zeitpunkt umgelagert oder aus dem Nachschubiager nachgeschoben werden.

In der Kommissionierung werden die Artikel statisch oder dynamisch aufgestellt. Artikeln mit hohem Absatz werden feste Bereitstellplätze in der Kommissionierung zugeordnet (statische Aufstellung). In den statischen Kanälen können mehrere Paletten des jeweiligen Artikels hintereinander bereit gestellt. Von der vorderen Palette wird kommissioniert, die hinteren Paletten stehen als Vorrat bereit. Sobald die vordere Palette abgeräumt worden ist, wird die Palette vom Picker entnommen und die Nachschubpaletten rollen automatisch über die Schwerkraftrollenbahnen 55 der Kommissionierkanäle 54 nach vorne. Durch die Nulldurchgangsquittierung des Pickers wird die Bereitstellung einer neuen Palette aus dem Vorratsbereich angestoßen. Die leere Lagerpalette wird für einen neuen Auftrag weiter verwendet oder in einem Leerpalettenspender entsorgt.

Bei unstabilen Lagerwaren kann die Neigung der Schwerkraftrollenbahnen so verändert werden, dass ein "automatisches nach vorne rollen" nicht stattfindet. Das Nachschubfahrzeug besitzt dann die Funktion, die Reservepalette (zweite Palette im Regal) durch eine neue Nachschubpalette aus dem Lagerbereich in den Kanal nachzuschieben. Die die Reservepalette nicht unmittelbar dem Kommissioneren zur Verfügung steht (abhängig von der Nachschubfrequenz und des Nachschubaufkommens) besitzt. das Picker-Fahrzeug eine automatische Zieheinrichtung, die es ermöglicht, die Reserverpalette aktiv "nach vorne" zu ziehen.

Artikel mit geringem Absatz werden zur Reduzierung der Pickfront dynamisch, d. h. nur bei aktuellem Bedarf, in der Kommissionierung aufgestellt. Hierfür sind bestimmte Kommissionierkanäle definiert, auf denen dynamisch Artikel bereit gestellt werden. Wenn die Anforderung von der Kommissionierung für einen dynamischen Artikel vorliegt, wird dieser auf dem dynamischen Platz aufgestellt und bei der Anforderung eines neuen Artikels wieder entnommen und in den Vorratsbereich zurückgestellt.

Da im voraus bekannt ist, weiche Auftragspaletten durch die Kommissionier-Gasse geschleust werden, wird die dynamische Artikelbelegung vor Auftragsstart durchgeführt, um die Verfügbarkeit der Artikel in den Kommissionierfront zu gewährleisten.

Alle Kommissionierkanäle der vorliegenden Anlage sind so ausgerüstet, dass sie sowohl für die statische als auch für die dynamische Bereitstellung genutzt werden können, es ist also möglich, einen statischen Kommissionierkanal bei Bedarf in einen dynamischen Kommissionierkanal umzufunktionieren und umgekehrt.

Die Artikelaufstellung wird kontinuierlich an die jeweiligen Erfordernisse angepasst. Auf Basis von Vergangenheitsbetrachtungen (Historie) und Prognosen bzw. bereits vorliegender Aufträge wird vom Lagerverwaltungsrechner in regelmäßigen Abständen eine optimale Artikelaufstellung in der Kommissionierung (Profil) ermittelt. Ab einer gewissen Abweichung des aktuellen Profils vom optimalen Profil wird die Pickfront reorganisiert (Reprofiling). Die Auslegung der Kanäle erlaubt eine automatische Rücknahme einer aufgestellten Palette in den Vorratsbereich. Soll ein statischer Artikel gewechselt werden, werden die entsprechenden Paletten aus dem Kanal entnommen. Der Kanal kann nun wahlweise statisch oder dynamisch neu belegt werden.

Die einzelnen Aufträge können auf Versandhilfsmittel aufgesplittet werden. Anhand der Abmessungen der Artikel aufgrund der Stammdaten werden für jeden Auftrag mit Hilfe eines Schlichtprogramms die Anzahl erforderlicher Paletten ermittelt und der Auftrag auf die Anzahl Paletten heruntergebrochen. Dabei können gewisse Optimierungskriterien berücksichtigt werden wie zum Beispiel das Zusammenhalten von Warengruppen auf einer Palette, Gewichtskriterien oder die Minimierung der anzufahrenden Module für eine Palette.

Aus dem Pool der möglichen Auftragspaletten werden nach bestimmten Kriterien Auftragspaletten gestartet. Eine Auftragspalette kann in jedem beliebigen Modul gestartet werden. Die Startkriterien berücksichtigen u. a. die Abfahrtszeit der Tour und die Belastung des Regalbediengeräts für dynamische Artikelbereitstellung im Startmodul. Bevorzugt werden Auftragspaletten in demjenigen Modul gestartet, in dem die schweren Artikel aufgestellt sind. Danach wird die Auftragspalette durch die anderen Module gesteuert, in denen ebenfalls Artikel für den Auftrag aufgestellt sind. Wesentliches Merkmal ist auch, dass Warengruppen innerhalb des Artikelspektrums zusammengehalten werden können; d.h. sie werden in einem Kommissionierbereich zusammengehalten. Dies ermöglicht "warengruppenreine" Auftragspaletten.

An dieser Stelle soll erwähnt werden, dass das erfindungsgemäßte System geeignet ist zur Verwendung einer Vielzahl von verschiedenen Lagereinheiten zur Aufnahme der jeweiligen Waren bzw. Artikel. Darunter fallen Paletten 38 (Figur 2) oder Kleinladungsträger 80 (Figur 14) ebenso wie Rollcontainer oder Packstücke (Collies) der Ware. Rollcontainer werden einzeln oder paarweise auf Unterpaletten beim Auftragsstart gesetzt. Die Unterpaletten dienen dann als Transporthilfmittel für die Rollcontainer im System. Die Packstücke oder Collies werden direkt in Durchlaufkanälen oder Fachbodenregalen im Kommissionierbereich bereit gestellt. Damit entfallen Umpackvorgänge in Behälter. Voraussetzung dafür ist, dass die Collie stabil sind, entsprechende Abmessungen besitzen und eine Verkaufseinheit darstellen.

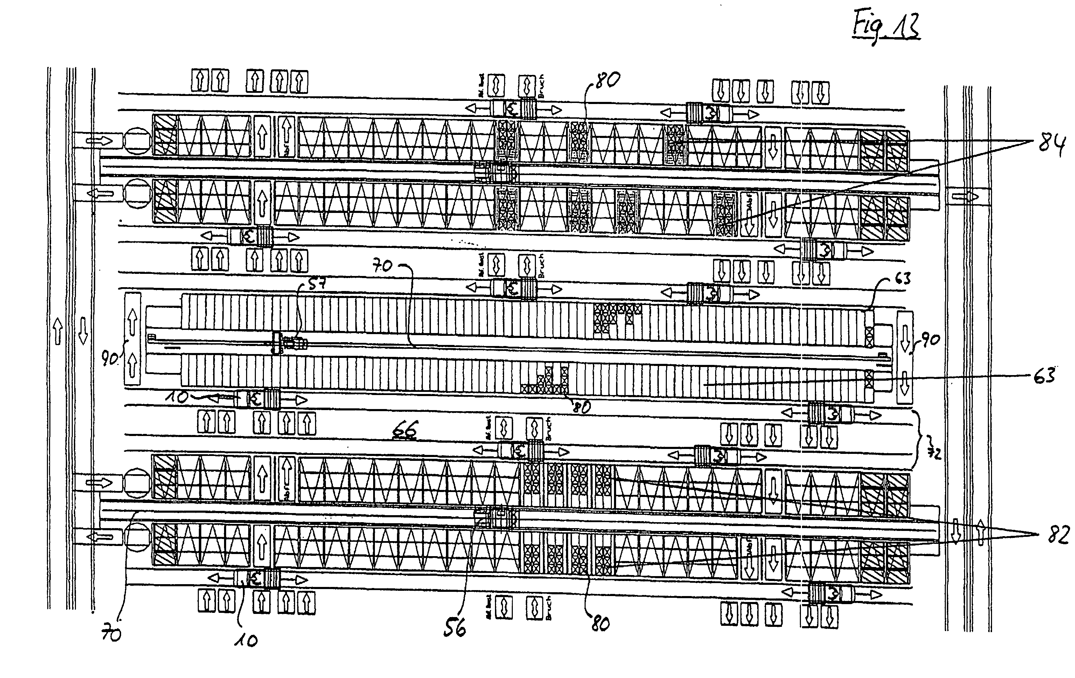

Für die Kommissionierung werden Picker-Fahrzeuge 10 eingesetzt, wie sie im folgenden unter Bezugnahme auf die Fig. 3 und 4 näher beschrieben werden. Diese Picker-Fahrzeuge werden im folgenden auch "Ergonomie-Picking-Mobil" oder kurz "EPM" genannt.

Das "Ergonomie-Picking-Mobil" 10 ist ein schienengebundenes Fahrzeug, welches ein Fahrwerk 12 mit Fahrantrieb aufweist, wobei die Fahrtrichtung des EPM in Fig. 1 durch die Pfeile A angedeutet ist und parallel zur Pickfront der Palettenregale verläuft. Das EPM umfasst eine erst Hubeinrichtung 14 für den Picker 18 und eine zweite Hubeinrichtung 16 für eine Auftragspalette 20. Jede Hubeinrichtung 14, 16 umfasst einen Rahmen 22 bzw. 24, der am in Verfahrrichtung des EPM gesehen vorderen bzw. hinteren Ende des Fahrwerks 12 sich senkrecht nach oben erstreckend befestigt ist und an dem jeweils eine Plattform 26 bzw. 28 höhenverstellbar geführt ist. Die beiden Plattformen 26, 28 sind, in Draufsicht, benachbart, unter Freilassung lediglich eines vergleichsweise schmalen Spalts, und sie sind mittels der jeweils zugeordneten Hubeinrichtungen 14 bzs. 16 unabhängig voneinander in ihrer Höhe einstellbar derart, dass die Höhe beispielsweise der Plattform 28 höher, gleich hoch oder tiefer liegen kann als die Höhe der Plattform 26.

Die zur Aufnahme des Pickers 18 dienende Plattform 26 ist mit einer Kabine mit umlaufender Absturzsicherung 30, einem Fahrersitz und einem integrierten Totmann-Schalter 32 ausgerüstet Der Fahrersitz ist als Steh-Sitz für eine ergonomische Position während der Fahrt ausgebildet Weitere, nicht näher dargestellte Sicherheitsausrüstungen sind ebenfalls vorgesehen wie z. B. Mittel, die verhindern, dass sich das Fahrzeug in Bewegung setzt, wenn der Picker noch außerhalb des Fahrzeugs hantiert (z. B. Umschlichten der Palette), nachdem der Pick quittiert wurde, oder die Quetschungen durch die Relativbewegung der Auftragspalette gegenüber der Plattform verhindern. Der Totmann-Schalter 32 dient gleichzeitig zur Quittierung der Kommissionierung.

Auf der Plattform 28 ist ein Lastaufnahmemittel 34 für die Auftragspalette 20 angeordnet, wobei das Lastaufnahmemittel 34 eine Bewegung der Auftragspalette 20 quer zur Verfahrrichtung A des EPM ermöglicht. Weiterhin trägt die Plattform 28 ein Terminal 36 zur Anzeige der Pickpositionen.

Das EMP wird vom (nicht dargestellten) Steuerrechner der Systemsteuerung angesteuert, welche einerseits das Fahrzeug positioniert und andererseits sowohl den Picker als auch die Auftragspaletten an der jeweiligen Entnahmeposition der im Palettenregal befindlichen Entnahmepalette in der ergonomisch jeweils günstigsten Position positioniert. Beispiele hierfür sind in den Fig. 5a bis 12b gezeigt.

Die Einstellung der Kommissionierplattform auf eine ergonomische Höhe erfolgt auf der Basis der Restbestandsmenge auf der Entnahmepalette 38. Die Einstellung der Höhe der die Auftragspalette 20 tragenden Plattform 28 erfolgt auf der Basis des Füllgrads der Auftragspalette durch Auswertung einer an der Plattform 28 angeordneten Sensortechnik. Die optimale Zugriffshöhe kann hierbei in der Steuerung auch individuell auf den jeweiligen Picker ausgerichtet werden. Der Picker hat darüber hinaus noch die Möglichkeit, die von der Steuerung voreingestellten Höhen manuell nach zu korrigieren. Die Fahrsteuerung in Gassenrichtung erfolgt hingegen vollautomatisch ohne Eingriffsmöglichkeit für den Picker.

Die Auftragspaletten werden durch die EPMs und die Nachschubfahrzeuge sukzessive durch die Pickfronten geschleust, in denen Artikel für die Auftragspalette aufgestellt sind. Wesentliches Merkmal ist auch, dass Warengruppen innerhalb des Artikelspektrums zusammengehalten werden können; d.h. sie werden in einem Kommissionierbereich der aus mehreren hinter einander angeordneten Modulen bestehen kann, zusammengehalten. Dies ermöglicht "warengruppenreine" Auftragspaletten. Werden in einer Pickfront mehrere EPMs eingesetzt, wird die Palette auf einem der Pufferplätze 64 abgestellt und vom nächsten EPM übernommen. Zum Wechsel zwischen zwei gegenüber liegenden Pickfronten wird die Palette ebenfalls auf Pufferplätzen zwischen den Pickfronten abgestellt und von einem EPM der anderen Pickfront übernommen. Der Wechsel auf die andere Seite eines Moduls erfolgt über in den Regalen 52 ausgebildete Pufferbahnen 66 sowie über das jeweilige Regalbediengerät 56 des zugeordneten Moduls 58. Sollen mehrere Pickfronten übersprungen werden, so kann die Palette über das Fördertechnik-Netzwerk 68 in das nächste relevante Modul weiter geschleust werden.

Zum Picken der Auftragspositionen wird zunächst eine Auftragspalette 20 vom Regalbediengerät 56 auf einer Pufferbahn 66 im Palettenregal 52 für die Übernahme durch ein EPM 10 bereit gestellt (oder es handelt sich um eine Leerpalette). Die Palette wird mit dem Lastaufnahmemittel 34 des EPM aufgenommen und die erste Entnahmeposition automatisch angefahren. In der Pickfront sind die Entnahmepaletten 38 bereit gestellt. Die Positionierung der EPM in der Pickfront vor der Entnahmepalette erfolgt vollautomatisch durch den Steuerrechner sowohl in x-Richtung als auch in y-Richtung. Für die Informationen der eigentlichen Kommissionierung ist auf dem EPM das Terminal 36 angebracht, auf dem die Entnahmemenge angezeigt werden. Nach der Positionierung vor dem jeweiligen Kanal 54 kann der Picker die Entnahmeposition überprüfen und er entnimmt dann die angezeigte Menge und schlichtet die Teile auf die Auftragspalette 20 um. Für diesen Vorgang wird die Plattform 26 des Pickers so eingestellt, dass sich für den Picker eine ergonomische Abnahmehöhe von der Entnahmepalette ergibt. Die Auftragspalette wird in der Höhe so eingestellt, dass die entnommenen Teile möglichst ohne Anheben oder Absenken durch den Picker auf die Auftragspalette übergeschoben werden können. Nach dem Umschlichten quittiert der Picker die Entnahmeposition. Das EPM positioniert sich automatisch vor der nächsten Entnahmepalette oder übergibt die Auftragspalette an einen Pufferplatz 64, wenn die Auftragspalette im Kommissionierbereich des EPM fertig gestellt wurde.

Je Pickfront arbeitet mindestens ein Picker auf je einem EPM, es können aber auch zwei EPMs in einer Pickfront eingesetzt werden. Bei zwei EPMs in einer Pickfront können sich die Arbeitsbereiche der einzelnen EPMs überlappen. Die Steuerung für die Auftragspalette berücksichtigt eine Wegoptimierung für den Picker und ermöglicht somit eine maximalen Kommissionierleistung. Nach Abschluss der Kommissionierung im Arbeitsbereich des jeweiligen EPM wird die Auftragspalette zur Weiterleitung in anderen Bereichen auf einem Pufferplatz abgestellt.

Nach dem letzten Pick wird die Auftragspalette 20 über eine Pufferbahn 66 an ein Regalbediengerät 56 übergeben und von diesem auf eine geeignete Fördertechnik abgestellt und in einen Versandbereich gefahren, wo eine Sortierung der Auftragspaletten zu Aufträgen und gegebenenfalls Touren erfolgt.

Ein Fahren der EPMs mit voll ausgefahrenem Hub ist problemlos möglich und eine kombinierte Hub-/Fahrbewegung ist mit dem EPM realisierbar. Damit erfolgt die Höhenpositionierung im wesentlichen schon während der eigentlichen Fahrzeit und nimmt damit keine zusätzliche Zeit in Anspruch. Durch das ständige Mitführen der Auftragspalette mit dem Kommissionierer entfallen jegliche Wegzeiten von der Entnahmepaiette zur Auftragspalette.

Die Fördertechnik zum erfindungsgemäßen System ermöglicht die Einlagerung in jedwedes gewünschte Modul. Um in jedem Kommissioniermodul Auftragspaletten starten zu können, ist weiterhin eine Leerpalettenzuführung zum Einspeispunkt eines jeden Kommissioniermoduls ohne weiteres möglich. Ebenso ist die fördertechnische Entsorgung der Leerpaletten aus jedem Modul gewährleistet. Schließlich besteht für die einzelnen Kommissioniermodule ein Fördertechnik-Netzwerk, das es ermöglicht, eine Auftragspalette in einer beliebigen Reihenfolge durch die Module zu schleusen.

Bei Hochregalen ist es auch möglich, mehrere Pickfahrzeuge übereinander auf Zwischenbühnen innerhalb der Gassen zu verwenden. Das Einlager- und Nachschubfahrzeug deckt dabei die gesamte Regalhöhe ab und stellt damit auch die "Förderverbindung" der Lagereinheiten von den übereinander liegenden Pickerfahrzeugen dar.

Wie sich aus dem Vorstehenden ergibt, weist das erfindungsgemäße System insbesondere folgende Vorteile auf:
- Integriertes System zur Lgerung und Kommissionierung von Paletten
- Mehrfachtiefe Bereitstellung der Warenpaletten für die kontinuierliche Kommissionierversorgung
- Reduzierung der Pickfront durch dynamische Artikelbereitstellung möglich
- Identische Gestaltung von statischen und dynamischen Plätzen ermöglicht größtmögliche Flexibilität für die Artikelaufstellung
- Optimale Bereitstellung durch automatisches Pickfront-Profiling und dynamische Bereitstellung der Langsamläufer
- Keine Sequenz der Auftragspaletten
- Hohe Pickleistung
- Entkopplung der Picker durch Puffer-Förderer zwischen den EPMs
- Minimale Wegzeiten durch Wegoptimierung und Verfahren des Pickers auf dem EPM
- Optimale Ergonomie beim Entnahmevorgang durch Hubkabine für Mitarbeiter
- Optimale Ergonomie beim Abgeben auf die Auftragspalette durch unabhängigen Hub für Auftragspalette
- Bereitstellung der Lagerpaletten quer; maximale Eingrifftiefe 800 mm
- Hohe Picksicherheit durch sequenzielles, rechnergesteuertes Anfahren der Entnahmepositionen
- Auftragsstart an jeder Stelle in der Anlage möglich (kein zentraler I-Punkt); gleichmäßige Auslastung der Anlage
- Einsstufige Kommissionierung direkt auf das Versandladehilfsmittel; nur eine Handling-Stufe
- Durch geeignetes Profiling artikelgruppenweise Kommissionierung in beliebiger Artikelgruppen-Reihenfolge möglich
- Optimierung der Durchlaufzeit durch Priorisierung und der Möglichkeit zum Überholen von Auftragspaletten möglich
- Automatischer Transport der Auftragspalette vom Auftragsstart bis zur Versandorientierung.

### 2. Ausführungsbeispiel: System zur Kommissionierung von Paletten und Lagerbehältern

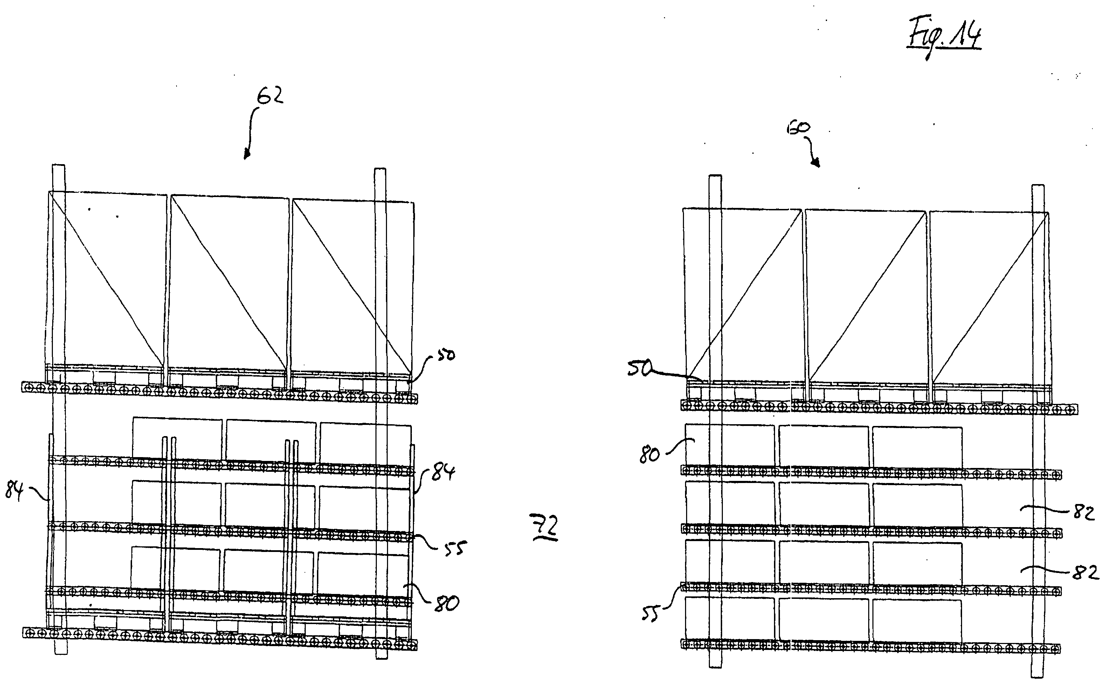

Ein weiteres Ausführungsbeispiel des erfindungsgemäßen Systems wird im folgenden unter Bezugnahme auf die Figuren 13 und 14 beschrieben.

Fig. 13 zeigt eine schematische Draufsicht auf ein Ausführungsbeispiel des erfindungsgemäßen Systems, das die integrierte Lagerung und Kommissionierung von Paletten und zusätzlich von Lagerbehältern 80 (Kleinladungsträgem KLT) für kleinere Artikel erlaubt. Figur 14 zeigt eine Teil-Querschnittsansicht eines derartigen Systems.

Dieses zweite Ausführungsbeispiel des erfindungsgemäßen Kommissioniersystems ist insbesondere anwendbar für Artikel, deren Verbrauchsvolumen ([Stückzahl] x Stückvolumen) gering ist und die von den physikalischen Abmessungen her für die Lagerung auf Paletten zu klein bzw. ungeeignet sind. Für deren Lagerung werden daher Lagerbehälter oder Kleinladungsträger (KLT 80) verwendet, die entweder wannenförmig oder tablarförmig ausgebildet sein können. Das erfindungsgemäße System erlaubt die Reduzierung der Pickfront für derartige Artikel und damit eine Reduzierung der Pickwege. Dies ermöglicht eine höhere Kommissionierleistung und kürzere Auftragsdurchlaufzeiten.

Zur Lagerung und Kommissionierung der KLTs 80 sind drei verschiedene Varianten möglich.

### 1) Lagerung und Bereitstellung der KLTs in spezifischen Stellplätzen bzw. -kanälen im Palettenmodul

Diese Variante ist in Fig. 13 im zuunterst dargestellten Regalmodul sowie in Fig. 14 auf der rechten Seite dargestellt. Die KLT werden in spezifischen, den Abmessungen der KLT angemessenen Stellplätzen gelagert und in spezifischen, den Abmessungen des KLT angepaßten Lagerkanälen 82 in der Kommissionierung bereitgestellt. Die Stellplätze und die Kommissionierkanäle 82 sind in das Palettenregal integriert. Dadurch ergibt sich sowohl im Lager- als auch im Kommissionierbereich eine Kombination aus Palettenstellplätzen (in Fig. 14 oben gezeigt) und KLT-Stellplätzen (in Fig. 14 unten dargestell).

Die Lagerung der KLT 80 kann längs oder quer erfolgen, je nachdem welche Ausrichtung für die Integration der Lagerkanäle in die Stahlkonstruktion des Palettenregals besser geeignet ist. Je nach vorhandenem Stellraum können die KLT 80 mehrfach hintereinander bereitgestellt werden. Dabei liegen die KLT auf geneigten Rollenbahnen 55 auf.

Die Einlagerung der Lagerbehälter 80 in die Nachschubplätze bzw. der Nachschub in die Kommissionierkanäle 82 erfolgt wie bei den Paletten mit einem vorzugsweise automatischen Regalbediengerat 57 (in Fig. 14 nicht dargestellt), weiches ein spezielles Lastaufnahmemittel aufweist, das für die Handhabung sowohl von Paletten als auch von KLT geeignet ist. Vorzugsweise sind zwei Teleskopgabeln für die Palettenhandhabung getrennt ansteuerbar und so ausgelegt, dass mit einer einzelnen Teleskopgabeln die KLT manipuliert werden können. Alternativ ist es auch möglich, die Einlager- und Nachschubprozesse mit einem manuellen Stapler, der per Datenfunk gesteuert wird, durchzuführen. Auch dieser Stapler ist vorzugsweise für die Manipulation von Paletten und KLT gleichermaßen geeignet.

Wie im Falle der Paletten können die beiden Bereitstellungsmethoden der statischen und der dynamischen Bereitstellung angewandt werden. Dabei werden aus dem Pool der in KLT 80 gelagerten und kommissionierten Artikel diejenigen mit großer Zugriffshäufigkeit statisch und diejenigen mit kleinerer Zugriffshäufigkeit dynamisch aufgestellt. Bei der statischen Aufstellung werden mehrere KLT eines Artikels hintereinander in einen Lagerkanal 82 gestellt, während bei der dynamischen Bereitstellung immer nur ein KLT in den Kanal 82 gebracht und bei Bedarf entnommen und ein neuer Artikel ebenfalls nur in einem Behälter nachgeschoben wird.

### (2) Bereitstellung der KLTs in mobilen Durchlaufkanal-Einsätzen im Palettenmodul

Diese zweite Variante ist in Fig. 13, zuoberst dargestelltes Regalmodul und in Fig. 14 auf der linken Seite dargestellt. Die KLTs sind wie bei der ersten Variante in spezifischen, den Abmessungen des KLT entsprechenden Stellplätzen gelagert.

Diese Stellplätze sind in mobilen Lagerkanal-Einsätzen 84 für die KLTs in die Palettenkanäle eingebracht. Bei den Lagerkanal-Einsätzen 84 handelt es sich um Trägereinheiten mit den Grundabmessungen einer Palette, auf denen Rollenleisten 55 für die Bereitstellung der KLT 80 auf mehreren Ebenen übereinander installiert sind. Wird ein Palettenkanal mit der entsprechenden Anzahl mobiler Lagerkanal-Einsätze 84 (Durchlaufkanal-Einsätze) bestückt, sind de facto mehrere KLT-Lagerkanäle eingerichtet.

Für die Bereitstellung in der Kommissionierung ergeben sich bei dieser Ausführungsform keine Änderungen für die Stahlkonstruktion des Palettenregals. Die mobilen Lagerkanal-Einsätze 84 können aufgrund der Grundabmessungen vom Regalbediengerät 56 gehandhabt werden und damit an beliebigen Stellen in der Pickfront auf- und wieder abgebaut werden. Damit läßt sich flexibel auf geänderte Anforderungen des Artikelprofils reagieren, wie etwa die Veränderung der Anzahl von Artikeln in KLTs, andere Positionen in der Pickfront usw.

Auch bei dieser Variante ist sowohl eine statische als auch eine dynamische Artikelbereitstellung möglich.

### (3) Lagerung und Bereitstellung in einem separaten Modul für Lagerbehälter

Bei dieser dritten Variante werden die KLTs 80 in mindestens einem Modul bestehend aus zwei kompletten Kommissionierfronten 63 nur für KLT bereitgestellt und kommissioniert. Diese Variante ist in Fig. 13 in der Mitte dargestellt. Die beiden Kommissionierfronten 63 sind so angeordnet, dass die Beschickungsseiten der Regalzeilen zueinander weisen, so dass das eingesetzte Regalbediengerät 57 nur KLTs manipulieren muß.

Bei diese Variante kommen für die Stahlkonstruktion des speziell für die Lagerung der Behälter 80 ausgebildeten Regals vorzugsweise Standardsysteme zum Einsatz. Die Lagerung der KLT erfolgt in der Regel längs doppeltief, die Durchlaufkanäle für die Bereitstellung in der Kommissionierung sind vorzugsweise dreifach tief ausgeführt.

Die Beschickung der Regale mit Einlagerungen und der Nachschub in die Kommissionierkanäle wird vorzugsweise durch ein Regalbediengerät 57 realisiert, das für die Aufnahme von zwei KLT hintereinander ausgebildet ist. Die Bereitstellung der KLT in der Kommissionierfront kann wie bei den beiden vorgenannten Varianten statisch oder dynamisch erfolgen.

Da die Auftragspaletten in diesem Fall nicht über Pufferförderer an das Regalbediengerät und von diesem wieder auf gegenüberliegende Pufferförderer übergeben werden kann, sind hierfür an beiden Stirnseiten des Regals vorzugsweise mindestens ein Pufferförderer 90 für die Übergabe von Paletten von einer Pickgasse 72 zur benachbarten Pickgasse installiert (siehe Fig. 13).

### Funktionsprinzip des zweiten Ausführungsbeispiels

Im folgenden werden die Arbeitsprozesse des zweiten Ausführungsbeispiels des erfindungsgemäßen Kommissioniersystems beschrieben.

### (1) Umpacken der Artikel in KLTs

Vor der Verwendung im Kommissioniersystem können diejenigen Artikel, die für die Kommissionierung aus KLT vorgesehen sind, von Paletten in KLTs umgepackt werden. Dieser Vorgang kann an speziellen Arbeitsplätzen (in den Figuren nicht dargstellt) außerhalb des Systems oder integriert im Kommissioniersystem erfolgen. Im Falle der separaten Arbeitsplätze werden dort Artikelpaletten und Leer-KLTs bereitgestellt und die fertig gepackten KLTs mittels Fördertechnik automatisch zur Einlagerung in die Regalmodule bereitgestellt.

Der Umpackvorgang erfolgt unabhängig von der Art der Bereitstellung der KLTs (vorstehend beschriebene Varianten 1 bis 3) in der Pickfront entsprechend folgendem Ablauf: Auf einem Palettenkanal werden Leer-KLT auf Paletten bereitgestellt und auf einem daneben liegenden Palettenplatz werden die umzupackenden Artikelpaletten bereitgestellt. Ein Lastaufnahmemittel nimmt einen Leer-KLT auf und packt rechnergesteuert die entsprechende Menge um. Der fertig gepackte und identifizierte Behälter wird über festinstallierte Förderstrecken für KLT dem Regalbediengerät zur Einlagerung bereitgestellt.

Die in der Kommissionierung entstehenden Leerbehälter werden wieder auf die Leerbehälterpaletten geschlichtet und somit die Versorgung des Umpackvorgangs mit Leerbehältem sichergestellt.

### (2) Einlagerung/Nachschub in die Kommissionierung

Das Regalbediengerät nimmt die bereitgestellten KLT für Einlagerung von einer Förderstrecke mit einem Teleskop auf und stellt diese auf den entsprechenden Lagerstellplätzen im Vorratsbereich des Regalmoduls ab. Die Versorgung der Kanäle in der Kommissionierung erfolgt nach demselben Prinzip wie beim ersten Ausführungsbeispiel (siehe vorstehende Beschreibung). Leer KLT werden aus dem Kanal entnommen, vom Picker-Fahrzeug gesammelt und bei Bedarf entsorgt.

### (3) Kontinuierliches Re-Profiling der Artikelaufstellung

Das kontinuierliche Re-Profiling der Artikelaufstellung kann für das KLT-Subsystem analog wie beim ersten Ausführungsbeispiel durchgeführt werden. Auch eine Umbelegung von KLT auf Paletten und umgekehrt kann in Abhängigkeit vom Artikelabsatzverhalten durchgeführt werden. Dazu werden eventuelle Rest-KLTs aufgebraucht bzw. Bestandsmengen in KLT umgepackt und dann entsprechend bereitgestellt.

Bei einer Systemausführung mit mobilen Lagerkanal-Einsätzen 84 (zweite Variante des 2. Ausführungsbeispiels) kann auch die Anzahl der KLT-Kanäle in der Pickfront sowie die Lokalisierung dieser Kanäle flexibel und den Anforderungen entsprechend modifiziert werden. Zum Reorganisieren der örtlichen Aufstellung der Lagerkanäle müssen diese vollständig geleert werden. Dann kann das Regalbediengerät die einzelnen mobilen Lagerkanal-Einsätze entnehmen und in einem anderen Palettenkanal wieder aufstellen.

### (4) Auftragsdurchlauf (Splitten der Auftragspaletten, Steuerung der Auftragspaletten, Picken und Versandbereitstellung)

Der Auftragsdurchlauf durch das System erfolgt auf gleiche Art und Weise wie beim ersten Ausführungsbeispiel und wird durch die Bereitstellung von Artikeln in KLTs nicht beeinflusst.

### (5) Gestaltung der Fördertechnik

Bei der Gestaltung der Fördertechnik muß zusätzlich beachtet werden, dass ggf. KLTs auf gewissen Strecken (Einlagerung, Verbindung mit Umpackplätzen) gefördert werden müssen. Hierfür ist ein eigenes Fördertechnik-Netzwerk zu installieren. Die Fördertechnik-Installation für den Auftragsdurchlauf bleibt hiervon unberührt.

Wie sich aus der vorstehenden detaillierten Beschreibung ergibt, weist das zweite Ausführungsbeispiel des erfindungsgemäßen Kommissioniersystems insbesondere folgende weiter Vorteile auf:
- integriertes System zur Lagerung und Kommissionierung von Paletten und KLT
- Kommissionierung aus Paletten und KLT in einem System auf eine Versandeinheit bei optimaler Entnahme-Ergonomie
- Lagerung und Kommissionierung der Artikel entsprechend Absatzverhalten und Absatzvolumen in KLT oder in Paletten
- Umbelegung zwischen Palette und KLT ist jederzeit möglich
- Mehrfachtiefe Bereitstellung von KLT in der Pickfront
- Drastische Reduzierung der Pickfront für Langsamläufer-Artikel durch Bereitstellung dieser in KLTs (ca. sechs Artikel auf einem Palettenstellplatz)
- weitere Reduzierung der Pickfront durch dynamische Artikelbereitstellung der KLT-Artikel möglich
- identische Gestaltung von statischen und dynamischen Plätzen ermöglicht eine größtmögliche Flexibilität für die Artikelaufstellung für KLT-Artikel
- optimale Bereitstellung durch automatisches Pickfront-Profiling und dynamische Bereitstellung der Langsamläufer im KLT-Bereich
- durch geeigneies Profiling ist eine artikelgruppenweise Kommissionierung in beliebiger Artikelgruppen-Reihenfolge möglich
- ein Nachschub-Regal-Bediengerät für die Manipulation von Paletten und KLT.

Bei der zweiten Variante des zweiten Ausführungsbeispiels ergeben sich durch den Einsatz der mobilen Lagerkanal-Einsätze 84 folgende zusätzliche Vorteile und Besonderheiten:
- flexible Belegung der Pickfront mit Paletten- und KLT-Kanälen
- Reorganisation der Pickfront auch bezüglich der Anzahl und des Ortes der KLT-Lagerkanäle möglich
- flexible Reaktion auf Änderungen der Anforderungen
- Zusammenhalten von Warengruppen ist auch bei geänderter Anzahl von KLT-Artikeln in der Warengruppe möglich, und
- Relokation der Kanaleinsätze ist durch ein automatisches Nachschub-Regalbediengerät möglich.

### Bezugszeichenliste

- 10: Picker-Fahrzeug
- 12: Fahrwerk
- 14: erste Hubeinrichtung
- 16: zweite Hubeinrichtung
- 18: Picker
- 20: Auftragspalette
- 22: Rahmen
- 24: Rahmen
- 26: Plattform
- 28: Plattform
- 30: Kabine mit Absturzsicherung
- 32: Totmann-Schalter
- 34: Lastaufnahmemittel
- 36: Terminal
- 38: Entnahmepalette
- 50: Paletten
- 52: Palettenregale
- 54: Kommissionierkanäle
- 55: Schwerkraftrollenbahnen
- 56,57: Regalbediengerät
- 58: Module
- 60: Regalzeile
- 62: Regalzeile
- 63: Regalzeile
- 64: Pufferplätze
- 66: Pufferbahnen
- 70: Einlager-Gasse
- 72: Pick-Gasse
- 74: Transportbahnen
- 76: Transportbahnen
- 80: Behälter (KLT)
- 82: Lagerkanäle
- 84: Lagerkanal-Einsätze
- 90: Pufferförderer

## Patentansprüche

1. System zum Kommissionieren von in einem Regallager befindlichen Artikeln, mit
- einer Mehrzahl paralleler Regalreihen (60, 62, 63) zum Lagern und/oder Puffern von Einheiten (38; 80) zur Aufnahme der Artikel
- zwischen den Regalreihen (60, 62, 63) abwechselnd gebildeten Einlager-Gassen (70) und Pick-Gassen (72),
- mindestens einem Einlager-Fahrzeug (56) in jeder Einlager-Gasse (70), das zur Aufnahme wenigstens einer Einheit (38; 80) ausgebildet ist und entlang einer jeden Einlager-Gasse (70) zum Einlagem der Einheiten in die Palettenregale verfahrbar ist,
- einer Systemsteuerung mit einem Steuerrechner,
- mindestens einem Picker-Fahrzeug (10) in jeder Pickgasse (72) zum Picken der zu kommissionierenden Einheiten, das entlang jeweils einer der beiden sich gegenüberliegenden, die Pick-Gasse (72) bildenden Pickfronten verfahrbar ist, **gekennzeichnet durch**
- Pufferplätzen (64) die in den Pickgassen (72) zwischen den Verfahrwegen der entlang den beiden gegenüberliegenden Pickfronten verfahrbaren Picker-Fahrzeugen (10) angeordnet sind, zum Zwischenpuffern von und/oder zur Übergabe der zu kommissionierenden Einheiten von einem Picker-Fahrzeug (10) auf einer Seite der Pick-Gasse (72) zu einem Picker-Fahrzeug (10) auf der anderen Seite der Pick-Gasse (72).

2. System nach Anspruch 1, **dadurch gekennzeichnet, dass** ein Picker-Fahrzeug (10) zur Aufnahme von Auftragspaletten (20) für die zu kommissionierenden Artikel ausgebildet ist.

3. System nach Anspruch 2, **dadurch gekennzeichnet, dass** in den Palettenregalen (60, 62) jeweils mindestens eine Pufferbahn (66) ausgebildet ist zur Übergabe von Auftragspaletten (20) von einem Picker-Fahrzeug (10) zu einem Einlager-Fahrzeug (56) und von dort gegebenenfalls zu einem Picker-Fahrzeug (10) der benachbarten Pickgasse (72), und/oder zur Übergabe einer Auftragspalette (20) von einem Einlager-Fahrzeug (56) zu einem Picker-Fahrzeug (10).

4. System nach einem der Ansprüche 1 bis 3, wobei die zu kommissionierenden Einheiten Paletten, Rollcontainer, Ladungsbehälter und/oder Packstücke (Collis) umfassen.

5. System nach einem der Ansprüche 1 bis 3, **dadurch gekennzeichnet, dass** die Regalreihen Palettenregale (60, 62) umfassen, in denen Lagerkanäle (82) für Behälter (80) bzw. Packstücke (Collis) ausgebildet sind.

6. System nach Anspruch 5, **dadurch gekennzeichnet, dass** die Behälter bzw. Packstücke (80) in den Lagerkanälen (82) längs oder quer mehrfach hintereinander gelagert werden können.

7. System nach Anspruch 5 oder 6, **dadurch gekennzeichnet, dass** ein Einlager-Fahrzeug (56) mit einem Lastaufnahmemittel zur Handhabung von Paletten und Ladungsbehältem vorgesehen ist.

8. System nach Anspruch 4, **dadurch gekennzeichnet, dass** in wenigstens einem Palettenregal Lagerkanal-Einsätze (84) zur Aufnahme von Behältern (80) vorgesehen sind.

9. System nach Anspruch 8, **dadurch gekennzeichnet, dass** die Lagerkanal-Einsätze (84) den Grundabmessungen einer Palette entsprechen und Rollenleisten (55) für die Lagerung von Lagerbehältern auf mehreren Ebenen übereinander aufweisen.

10. System nach einem der Ansprüche 1 bis 9, **dadurch gekennzeichnet, dass** wengistens ein Regalmodul bestehend aus zwei parallelen, beidseitig einer Einlager-Gasse (70) angeordneten Regaleinheiten als Regalmodul (63) zur Lagerung von Behältern (80) ausgebildet ist.

11. System nach Anspruch 10, **dadurch gekennzeichnet, dass** separate Pufferförderer (90) an beiden Stirnseiten des Regalmoduls (63) angeordnet sind.

12. System nach einem der Ansprüche 4 bis 10, **dadurch gekennzeichnet, dass** die Lagerbehälter (80) als wannenförmige oder tablettförmige Träger für kleinere Gegenstände ausgebildet sind.

13. System nach einem der vorangehenden Ansprüche, **dadurch gekennzeichnet, dass** an den Regalreihen (60, 62, 63) sowohl statische als auch dynamische Kommissionierkanäle (54) ausgebildet sind.

14. System nach Anspruch 13, **dadurch gekennzeichnet, dass** zumindest ein Teil der Kommissionierkanäle (54), vorzugsweise jedoch alle Kommissionierkanäle (54) der Regale (60, 62, 63) so ausgebildet sind, dass sie sowohl als statische als auch als dynamische Kommissionierkanäle nutzbar sind.

15. System nach einem der vorhergehenden Ansprüche, **dadurch gekennzeichnet, dass** es Steuerungsmittel umfasst, um auf der Basis von Vergangenheitsbetrachtungen und/oder Prognosen und/oder vorliegender Aufträge die optimale Artikelaufstellung in den Kommissionierkanälen (54) zu ermitteln und bei einer Abweichung hiervon die Pickfront zu reorganisieren.

16. System nach Anspruch 4 und 5, **dadurch gekennzeichnet, dass** bei der Reorganisation der Pickfront die Art - statisch oder dynamisch - der Kommissionierkanäle (54) änderbar ist.

17. System nach einem der vorhergehenden Ansprüche, **dadurch gekennzeichnet, dass** die Kommissionierkanäle (54) der Palettenregale (60, 62) zur mehrfachtiefen Lagerung der Paletten ausgebildet sind.

18. System nach einem der vorhergehenden Ansprüche, **dadurch gekennzeichnet, dass** die Paletten in den Kommissionierkanälen (54) der Palettenregale (60, 62) quer aufnehmbar sind.

19. System nach einem der vorhergehenden Ansprüche, **dadurch gekennzeichnet, dass** die Kommissionierkanäle (54) in den Regalen (60, 62, 63) in mehreren Ebenen übereinander liegend angeordnet sind.

20. System nach einem der vorhergehenden Ansprüche, **dadurch gekennzeichnet, dass** die Einlager- Fahrzeuge (56) als automatische Regelbediengeräte und Nachschub-Fahrzeuge ausgebildet sind, die außerdem Mittel zur Handhabung von Behältern (80) aufweisen.

21. System nach einem der vorhergehenden Ansprüche, **dadurch gekennzeichnet, dass** pro Einlager-Gasse (70) ein Einlager-Fahrzeug (56) vorgesehen ist, welches beide sich in einer Einlager-Gasse gegenüberliegenden Palettenregale (60, 62) bedient.

22. System nach einem der vorhergehenden Ansprüche, **dadurch gekennzeichnet, dass** an mindestens einer Pickfront eines Palettenregals (60, 62) Picker-Fahrzeuge (10) vorgesehen sind.

23. System nach einem der vorhergehenden Ansprüche, **gekennzeichnet durch** ein an zumindest einem Ende der Einlager-Gassen (70) bzw. Pick-Gassen (72) angeordnetes Paletten-Fördersystem (74, 76), welches quer zu den Gassen verläuft.

24. System nach einem der vorhergehenden Ansprüche, **dadurch gekennzeichnet, dass** das Picker-Fahrzeug (10) zur Aufnahme eines Pickers (18) ausgebildet ist.

25. System nach Anspruch 24, **dadurch gekennzeichnet, dass** das Picker-Fahrzeug (10) eine Auftragspalette (20) und den Picker (18) unabhängig voneinander höhenverstellbar trägt.

26. System nach Anspruch 24 oder 25, **dadurch gekennzeichnet, dass** das Picker-Fahrzeug (10) die Auftragspalette (20) relativ zum Picker (18) höhenverstellbar trägt.

27. System nach einem der Ansprüche 24 bis 26, **gekennzeichnet durch** eine erste Hubeinrichtung (14) mit einer höhenverstellbaren Picker-Trageinrichtung (26) für den Picker (18) und eine zweite Hubeinrichtung (16) mit einer höhenverstellbaren Paletten-Trageinrichtung (28) für eine Auftragspalette (20), wobei die Picker-Trageinrichtung und die Paletten-Trageinrichtung relativ zur jeweiligen Entnahmeposition unabhängig voneinander in ihrer Höhe positionierbar sind.

28. System nach Anspruch 27, **dadurch gekennzeichnet, dass** das Picker-Fahrzeug (10) eine Basis (12) aufweist, an deren in Verfahrrichtung (A) gesehen einer Seite die erste Hubeinrichtung (14) und an deren anderer Seite die zweite Hubeinrichtung (16) angeordnet ist.

29. System nach Anspruch 28, **dadurch gekennzeichnet, dass** jede Hubeinrichtung (14, 16) einen vertikalen Rahmen (22, 24) aufweist, an dem die jeweilige Trageinrichtung (26, 28) vertikal verfahrbar ist.

30. System nach einem der Ansprüche 27 bis 29, **dadurch gekennzeichnet, dass** die Picker-Trageinrichtung (26) und die Paletten-Trageinrichtung (28) in Draufsicht sich gegenüberliegend angeordnet sind.

31. System nach einem der vorhergehenden Ansprüche, **dadurch gekennzeichnet, dass** das Picker-Fahrzeug (10) schienengebunden ist.

32. System nach einem der vorhergehenden Ansprüche 27 bis 31, **dadurch gekennzeichnet, dass** die Picker-Trageinrichtung (26) eine umlaufende Absturzsicherung (30) für den Picker aufweist.

33. System nach einem der Ansprüche 27 bis 32, **dadurch gekennzeichnet, dass** die Paletten-Trageinrichtung (28) oberhalb der Auftragspalette (20) ein Terminal (36) zur Anzeige der Pickmenge aufweist.

34. System nach einem der Ansprüche 27 bis 33, **dadurch gekennzeichnet, dass** die Picker-Trageinrichtung (26) einen Totmann-Schalter (32) aufweist.

35. System nach Anspruch 34, **dadurch gekennzeichnet, dass** der Totmann-Schalter (32) zusätzlich zur Quittierung der Kommissionierung ausgebildet ist.

36. System nach einem der Ansprüche 27 bis 35, **dadurch gekennzeichnet, dass** die Paletten-Trageeinrichtung (28) ein Lastaufnahmemittel (34) zum Aufnehmen und Abgeben der Auftragspalette (20) umfasst.

37. System nach Anspruch 36, **dadurch gekennzeichnet, dass** das Lastaufnahmemittel (34) so ausgebildet ist, dass ein Transport der Auftragspalette (20) quer zur Verfahrrichtung (A) des Picker-Fahrzeugs (10) ermöglicht wird.

38. System nach einem der Ansprüche 27 bis 37, **dadurch gekennzeichnet, dass** die Paletten-Trageinrichtung (28) eine Sensoreinrichtung zum Ermitteln des Füllgrades der Auftragspalette (20) aufweist.

39. System nach einem der Ansprüche 27 bis 38, **dadurch gekennzeichnet, dass** das Verfahren des Picker-Fahrzeugs (10) und der Hubeinrichtungen (14, 16) zu den jeweiligen Entnahmepositionen bzw. Übergabepositionen mittels eines Steuerrechners der Systemsteuerung steuerbar ist.

40. System nach Anspruch 39, **dadurch gekennzeichnet, dass** die Höhe der Picker-Trageinrichtung (26) an der jeweiligen Entnahmeposition auf der Basis der Restbestandsmenge der Artikel auf der Entnahmepalette (38) steuerbar ist.

41. System nach Anspruch 39 oder 40, **dadurch gekennzeichnet, dass** die Höhe der Paletten-Trageinrichtung (28) an der jeweiligen Entnahmeposition auf der Basis des Füllgrades der Auftragspalette (20) steuerbar ist.

42. System nach Anspruch 40 oder 41, **dadurch gekennzeichnet, dass** die Höhe der Picker-Trageinrichtung (26) und/oder der Paletten-Trageinrichtung (28) an der jeweiligen Entnahmeposition für jeden Picker individuell um einen bestimmten Betrag korrigierbar ist.

43. System nach einem der Ansprüche 39 bis 42, **dadurch gekennzeichnet, dass** die von der Systemsteuerung vorgegebenen Höhen vom Picker manuell korrigierbar sind.

44. System nach einem der Ansprüche 27 bis 43, **dadurch gekennzeichnet, dass** die Verfahrbewegung des Fahrzeugs (10) und die Hubbewegungen der Hubeinrichtungen (14, 16) gegebenenfalls gleichzeitig erfolgen.

## Claims

1. System for picking articles situated in a rack storage unit, comprising
- a plurality of parallel rack rows (60, 62, 63) for the storage and/or temporary storage of units (38; 80) for receiving the articles
- storage aisles (70) and picking aisles (72) formed alternately between the rack rows (60, 62, 63),
- at least one storage vehicle (56) in each storage aisle (70), which vehicle is designed to accommodate at least one unit (38; 80) and is capable of travelling along each storage aisle (70) to place the units into storage in the pallet racks,
- a system controller comprising a control computer,
- at least one picker vehicle (10) in each picking aisle (72) for picking the units to be picked, which vehicle is capable of travelling along in each case one of the two mutually opposing picking fronts forming the picking aisle (72), and **characterized by**
- buffer locations (64), which are disposed in the picking aisles (72) between the routes of the picker vehicles (10) travelling along the two opposing picking fronts, for the intermediate storage and/or transfer of the pick articles from a picker vehicle (10) at one side of the picking aisle (72) to a picker vehicle (10) at the other side of the picking aisle (72).

2. System according to claim 1, **characterized in that** a picker vehicle (10) is designed to accommodate order pallets (20) for the articles which are to be picked.

3. System according to claim 2, **characterized in that** constructed in the pallet racks (60, 62) is at least one buffer track (66) for transferring order pallets (20) from a picker vehicle (10) to a storage vehicle (56) and from there optionally to a picker vehicle (10) of the adjacent picking aisle (72), and/or for transferring an order pallet (20) from a storage vehicle (56) to a picker vehicle (10).

4. System according to one of claims 1 to 3, wherein the units to be picked comprise pallets, rolling containers, load containers and/or package units (collies).

5. System according to one of claims 1 to 3, **characterized in that** the rack rows comprise pallet racks (60, 62), in which storage channels (82) for containers and/or package units (collies) are formed.

6. System according to claim 5, **characterized in that** the containers and/or package units (80) may be stored in the storage channels (82) longitudinally or transversely a plurality of units deep.

7. System according to claim 5 or 6, **characterized in that** a storage vehicle (56) is provided with a load-receiving means for handling pallets and load containers.

8. System according to claim 4, **characterized in that** storage channel inserts (84) for receiving containers (80) are provided in at least one pallet rack.

9. System according to claim 8, **characterized in that** the storage channel inserts (84) correspond to the basic dimensions of a pallet and comprise roller rails (55) for the storage of storage containers on a plurality of planes one above the other.

10. System according to one of claims 1 to 9, **characterized in that** at least one rack module comprising two parallel rack units disposed on either side of a storage aisle (70) is designed as a rack module (63) for the storage of containers (80).

11. System according to claim 10, **characterized in that** separate buffer conveyors (90) are disposed at either end of the rack module (63).

12. System according to one of claims 4 to 10, **characterized in that** the storage containers (80) take the form of trough- or tray-shaped carriers for smaller articles.

13. System according to one of the preceding claims, **characterized in that** both static and dynamic picking channels (54) are formed at the rack rows (60, 62, 63).

14. System according to claim 13, **characterized in that** at least some of the picking channels (54) but preferably all of the picking channels (54) of the racks (60, 62, 63) are designed so as to be usable both as static and as dynamic picking channels.

15. System according to one of the preceding claims, **characterized in that** it comprises control means for determining on the basis of records and/or prognoses and/or present orders the optimum article line-up in the picking channels (54) and, in the event of a variation from this, reorganizing the picking front.

16. System according to claims 4 and 5, **characterized in that**, upon reorganization of the picking front, the nature - static or dynamic - of the picking channels (54) is variable.

17. System according to claim 1, **characterized in that** the picking channels (54) of the pallet racks (60, 62) are so designed that the pallets may be stored a plurality of pallets deep.

18. System according to one of the preceding claims, **characterized in that** the pallets are receivable transversely in the picking channels (54) of the pallet racks (60, 62).

19. System according to one of the preceding claims, **characterized in that** the picking channels (54) are disposed in the racks (60, 62, 63) in a plurality of planes one above the other.

20. System according to one of the preceding claims, **characterized in that** the storage vehicles (56) take the form of automatic rack attendance units and supply vehicles, which moreover comprise means of handling containers (80).

21. System according to one of the preceding claims, **characterized in that** for each storage aisle (70) one storage vehicle (56) is provided, which attends both pallet racks (60, 62) lying opposite one another in a storage aisle.

22. System according to one of the preceding claims, **characterized in that** picker vehicles (10) are provided at at least one picking front of a pallet rack (60, 62).

23. System according to one of the preceding claims, **characterized by** a pallet conveyor system (74, 76), which is disposed at at least one end of the storage aisles (70) and/or picking aisles (72) and extends at right angles to the aisles.

24. System according to one of the preceding claims, **characterized in that** the picker vehicle (10) is designed so as to accommodate a picker (18).

25. System according to claim 24, **characterized in that** the picker vehicle (10) carries an order pallet (20) and the picker (18) in such a way that the latter are height-adjustable independently of one another.

26. System according to claim 24 or 25, **characterized in that** the picker vehicle (10) carries the order pallet (20) in a height-adjustable manner relative to the picker (18).

27. System according to one of claims 24 to 26, **characterized by** a first lifting device (14) with a height-adjustable picker-carrying device (26) for the picker (18) and a second lifting device (16) having a height-adjustable pallet-carrying device (28) for an order pallet (20), wherein the picker-carrying device and the pallet-carrying device are positionable heightwise relative to the respective retrieval position independently of one another.

28. System according to claim 27, **characterized in that** the picker vehicle (10) comprises a base (12), on which at the - viewed in travelling direction (A) - one end the first lifting device (14) and at the other end the second lifting device (16) is disposed.

29. System according to claim 28, **characterized in that** each lifting device (14, 16) comprises a vertical frame (22, 24), along which the respective carrying device (26, 28) is vertically displaceable.

30. System according to one of claims 28 to 29, **characterized in that** the picker-carrying device (26) and the pallet-carrying device (28) in plan view are disposed opposite one another.

31. System according to one of the preceding claims, **characterized in that** the picker vehicle (10) is rail-mounted.

32. System according to one of claims 27 to 31, **characterized in that** the picker-carrying device (26) comprises a circumferential crash guard (30) for the picker.

33. System according to one of claims 28 to 32, **characterized in that** above the order pallet (20) the pallet-carrying device (28) comprises a terminal (36) for displaying the picking quantity.

34. System according to one of claims 27 to 33, **characterized in that** the picker-carrying device (26) comprises a dead man's switch (32).

35. System according to claim 34, **characterized in that** the dead man's switch (32) is additionally designed for acknowledgement of the pick.

36. System according to one of claims 27 to 35, **characterized in that** the pallet-carrying device (28) comprises a load-receiving means (34) for receiving and delivering the order pallet (20).

37. System according to claim 36, **characterized in that** the load-receiving means (34) is designed so as to enable transporting of the order pallet (20) at right angles to the travelling direction (A) of the picker vehicle (10).

38. System according to one of claims 27 to 37, **characterized in that** the pallet-carrying device (28) comprises a sensor device for determining the degree of charging of the order pallet (20).

39. System according to one of claims 27 to 38, **characterized in that** travel of the picker vehicle (10) and of the lifting devices (14, 16) to the respective retrieval positions and/or transfer positions is controllable by means of a control computer of the system controller.

40. System according to claim 39, **characterized in that** the height of the picker-carrying device (26) at the respective retrieval position is controllable on the basis of the residual stock quantity of the articles on the retrieval pallet (38).

41. System according to claim 39 or 40, **characterized in that** the height of the pallet-carrying device (28) at the respective retrieval position is controllable on the basis of the degree of charging of the order pallet (20).

42. System according to claim 40 or 41, **characterized in that** the height of the picker-carrying device (26) and/or the pallet-carrying device (28) at the respective retrieval position is correctable by a specific amount individually for each picker.

43. System according to one of claims 39 to 42, **characterized in that** the heights preset by the system controller are manually correctable by the picker.

44. System according to one of claims 27 to 43, **characterized in that** the travelling movement of the vehicle (10) and the lifting movements of the lifting devices (14, 16) are optionally effected simultaneously.

## Revendications

1. Système pour la composition de commandes d'articles stockés dans des entrepôts à étagères, comportant :
- une pluralité de rangées d'étagères (60, 62, 63) pour stocker et/ou mettre en stockage tampon des éléments (38 ; 80) pour loger les articles,
- des ruelles d'introduction en stock (70) et des ruelles de prélèvement (72) formées de façon alternée entre les rangées d'étagères (60, 62, 63),
- au moins un véhicule de mise en stock (56) dans chaque ruelle de mise en stock (70), réalisé pour recevoir au moins un élément (38 ; 80) et déplaçable le long de chaque ruelle de mise en stock (70) pour mettre en stock les éléments dans les étagères à palettes,
- une commande de système équipée d'un ordinateur de commande,
- au moins un véhicule préleveur (10) dans chaque ruelle de prélèvement (72) pour prélever les éléments à préparer, déplaçable chaque fois le long d'un des deux fronts de prélèvement opposés formant la ruelle de prélèvement (72), **caractérisé par** :
- des emplacements tampon (64) disposés dans les ruelles de prélèvement (72) entre les voies de déplacement des véhicules préleveurs (10) déplaçables le long des deux fronts de prélèvement opposés, pour mettre en tampon intermédiaire et/ou pour effectuer le transfert des éléments à préparer, d'un véhicule préleveur (10) d'un côté de la ruelle de prélèvement (72) à un véhicule préleveur (10) de l'autre côté de la ruelle de prélèvement (72).

2. Système selon la revendication 1, **caractérisé en ce qu'**un véhicule préleveur (10) est réalisé pour recevoir des palettes d'ordres (20) pour les articles à préparer.

3. Système selon la revendication 2, **caractérisé en ce que**, dans les étagères à palettes (60, 62), est chaque fois réalisée au moins une piste de tampon (66) pour le transfert de palettes d'ordres (20) d'un véhicule préleveur (10) à un véhicule de mise en stock (56) et, de là, le cas échéant à un véhicule préleveur (10) de la ruelle de prélèvement (72) voisine et/ou pour le transfert d'une palette d'ordres (20) d'un véhicule de mise en stock (56) à un véhicule préleveur (10).

4. Système selon l'une des revendications 1 à 3, où les éléments à préparer comprennent des palettes, des conteneurs roulants, des récipients de chargement et/ou des éléments de paquets (colis).

5. Système selon l'une des revendications 1 à 3, **caractérisé en ce que** les rangées d'étagères comprennent des étagères à palettes (60, 62) dans lesquelles des canaux de stockage (82) sont réalisés pour des récipients (80) ou des éléments d'emballage (colis).

6. Système selon la revendication 5, **caractérisé en ce que** les récipients ou éléments d'emballage (80) peuvent être stockés dans les canaux de stockage (82), en plusieurs exemplaires les uns derrière les autres, en direction longitudinale ou transversale.

7. Système selon les revendications 5 ou 6, **caractérisé en ce qu'**un véhicule de mise en stock (56), avec des moyens de support de charge pour la manutention de palettes et de récipients de chargement, est prévu.

8. Système selon la revendication 4, **caractérisé en ce que**, en au moins une étagère à palette, sont prévus des inserts pour canal de stockage (84), devant recevoir des récipients (80).

9. Système selon la revendication 8, **caractérisé en ce que** les inserts pour canaux de stockage (84) correspondent aux dimensions au sol d'une palette et présentent des bandes à rouleaux (55) pour stocker des récipients de stockage les uns au-dessus des autres sur plusieurs plans.

10. Système selon l'une des revendications 1 à 9, **caractérisé en ce qu'**au moins un module d'étagère, formé de deux unités d'étagères parallèles disposées de part et d'autre d'une ruelle de mise en stock (70), est réalisé sous forme de module d'étagères (63) pour stocker des récipients (80).

11. Système selon la revendication 10, **caractérisé en ce que** des transporteurs tampon (90) séparés sont disposés sur les deux faces frontales du module d'étagères (63).

12. Système selon l'une des revendications 4 à 10, **caractérisé en ce que** les récipients de stockage (80) sont réalisés sous la forme de supports en forme d'auge ou en forme de tablette pour de petits objets.

13. Système selon l'une des revendications précédentes, **caractérisé en ce que**, sur les rangées d'étagères (60, 62, 63), sont réalisés des canaux de préparation (54) tant statiques que dynamiques.

14. Système selon la revendication 13, **caractérisé en ce qu'**au moins une partie des canaux de préparation (54), de préférence cependant, tous les canaux de préparation (54) des étagères (60, 62, 63) sont réalisées de manière à être utilisables en tant que canaux de préparation tant statique que dynamique.

15. Système selon l'une des revendications précédentes, **caractérisé en ce qu'**il comprend des moyens de commande pour déterminer sur la base d'observation passée et/ou de pronostics et/ou d'ordres présents la position optimale des articles dans les canaux de préparation (54) et, en cas d'écart par rapport à cela, de réorganiser le front de prélèvement.

16. Système selon les revendications 4 et 5, **caractérisé en ce que**, lors de la réorganisation du fond de prélèvement, le type - statique ou dynamique - des canaux de préparation (54) est modifiable.

17. Système selon l'une des revendications précédentes, **caractérisé en ce que** les canaux de préparation (54) des étagères à palettes (60, 62) sont réalisés pour un stockage multiple en profondeur des palettes.

18. Système selon l'une des revendications précédentes, **caractérisé en ce que** les palettes sont susceptibles d'être logées transversalement dans les canaux de préparation (54) des étagères à palettes (60, 62).

19. Système selon l'une des revendications précédentes, **caractérisé en ce que** les canaux de préparation (54) sont disposés horizontalement les uns au-dessus des autres en plusieurs plans dans les étagères (60, 62, 63).

20. Système selon l'une des revendications précédentes, **caractérisé en ce que** les véhicules de mise en stock (56) sont réalisés sous la forme d'appareils de manipulation réglés et de véhicules suiveurs présentant en outre des moyens pour la manutention de récipients (80).

21. Système selon l'une des revendications précédentes, **caractérisé en ce que**, par ruelle de mise en stock (70), est prévu un véhicule de mise en stock (56), qui dessert les deux étagères à palettes (60, 62) placées en regard l'une de l'autre dans une ruelle de mise en stock.

22. Système selon l'une des revendications précédentes, **caractérisé en ce que** sur au moins un front de prélèvement d'une étagère à palette (60, 62) sont prévus des véhicules préleveurs (10).

23. Système selon l'une des revendications précédentes, **caractérisé par** un système de fourniture de palettes (74, 76), disposé sur au moins une extrémité des ruelles de mise en stock (70) ou des ruelles de prélèvement (72) et s'étendant transversalement par rapport aux ruelles.

24. Système selon l'une des revendications précédentes, **caractérisé en ce que** le véhicule préleveur (10) est réalisé pour recevoir un préleveur (18).

25. Système selon la revendication 24, **caractérisé en ce que** le véhicule préleveur (10) porte de façon réglable en hauteur, indépendamment l'un de l'autre, une palette d'ordres (20) et le préleveur (18).

26. Système selon la revendication 24 ou 25, **caractérisé en ce que** le véhicule préleveur (10) porte de façon réglable en hauteur la palette d'ordres (20) relativement au préleveur (18).

27. Système selon l'une des revendications 24 à 26, **caractérisé par** un premier dispositif de levage (14) muni d'un dispositif support de préleveur (26) réglable en hauteur pour le préleveur (18) et un deuxième dispositif de levage (16) avec un dispositif support à palette (28) réglable en hauteur pour une palette d'ordres (20), le dispositif support de préleveur et le dispositif support de palette étant positionnables en hauteur indépendamment l'un de l'autre par rapport à la position de prélèvement respective.

28. Système selon la revendication 27, **caractérisé en ce que** le véhicule préleveur (10) présente une base (12) sur laquelle, en observant dans la direction de déplacement (A), le premier dispositif leveur (14) est disposé d'un côté, et le deuxième dispositif leveur (16) est disposé de l'autre côté.

29. Système selon la revendication 28, **caractérisé en ce que** chaque dispositif leveur (14, 16) présente un cadre (22, 24) vertical sur lequel le dispositif support (26, 28) respectif est déplaçable verticalement.

30. Système selon l'une des revendications 27 à 29, **caractérisé en ce que** le dispositif support de préleveur (26) et le dispositif support de palette (28) sont disposés à l'opposé, en observant en vue de dessus.

31. Système selon l'une des revendications précédentes, **caractérisé en ce que** le véhicule préleveur (10) est relié à des rails.

32. Système selon l'une des revendications 27 à 31, **caractérisé en ce que** le dispositif de support préleveur (26) présente une sécurité anti-chute (30) de pourtour pour le préleveur.

33. Système selon l'une des revendications 27 à 32, **caractérisé en ce que** le dispositif support à palette (28) présente au-dessus de la palette d'ordres (20) un terminal (36) pour l'affichage de la quantité prélevée.

34. Système selon l'une des revendications 27 à 33, **caractérisé en ce que** le dispositif support préleveur (26) présente un interrupteur d'homme mort (32).

35. Système selon la revendication 34, **caractérisé en ce que** l'interrupteur d'homme mort (32) est réalisé en plus pour l'acquittement de la préparation de commande.

36. Système selon l'une des revendications 27 à 35, **caractérisé en ce que** le dispositif support de palette (28) comprend un moyen support de charge (34) pour recevoir et délivrer la palette d'ordres (20).

37. Système selon la revendication 36, **caractérisé en ce que** le moyen support de charge (34) est réalisé de manière qu'un transport de la palette d'ordres (20), transversalement à la direction de déplacement (A) du véhicule préleveur (10) est possible.

38. Système selon l'une des revendications 27 à 37, **caractérisé en ce que** le dispositif support à palette (28) présente un dispositif à capteur pour déterminer le degré de remplissage de la palette d'ordres (20).

39. Système selon l'une des revendications 27 à 38, **caractérisé en ce que** le déplacement du véhicule préleveur (10) et des dispositifs leveurs (14, 16) aux positions de prélèvement, ou positions de transfert respectives, est susceptible d'être commandé à l'aide d'un ordinateur appartenant à la commande du système.

40. Système selon la revendication 39, **caractérisé en ce que** la hauteur du dispositif support de préleveur, (26) à la position de prélèvement respective, est susceptible d'être commandée sur la base de la quantité restante en stock des articles sur la palette de prélèvement (38).

41. Système selon la revendication 39 ou 40, **caractérisé en ce que** la hauteur du dispositif support à palette (28) à la position de prélèvement respective est susceptible d'être commandée sur la base du degré de remplissage de la palette d'ordres (20).

42. Système selon la revendication 40 ou 41, **caractérisé en ce que** la hauteur du dispositif support à préleveur (26) et/ou du dispositif support à palette (28) à la position de prélèvement respective est susceptible d'être corrigée pour chaque préleveur, individuellement, d'une quantité déterminée.

43. Système selon l'une des revendications 39 à 42, **caractérisé en ce que** les hauteurs du préleveur prédéterminées par la commande du système sont susceptibles d'être corrigées manuellement.

44. Système selon l'une des revendications 27 à 43, **caractérisé en ce que** le déplacement horizontal du véhicule (10) et les déplacements verticaux des dispositif leveurs (14, 16) se font, le cas échéant, simultanément.
